# EUROPÄISCHE PATENTSCHRIFT

(11) **EP 2 234 831 B1**
(45) Veröffentlichungstag und Bekanntmachung des Hinweises auf die Patenterteilung: **20.06.2012**
(21) Anmeldenummer: 10700297.4
(22) Anmeldetag: 05.01.2010
(51) Int. Cl.: B60J 7/05

(54) **MECHANIK FÜR EIN VERSTELLBARES KAROSSERIEBAUTEIL EINES FAHRZEUGS**
MECHANISM FOR AN ADJUSTABLE CHASSIS COMPONENT OF A VEHICLE
MECANIQUE POUR UN ELEMENT DE CARROSSERIE DEPLAÇABLE D'UN VEHICULE

(30) Priorität: 09.02.2009 DE 102009008117; 31.07.2009 DE 102009035508
(43) Veröffentlichungstag der Anmeldung: 06.10.2010
(73) Patentinhaber: Webasto AG, 82131 Stockdorf (DE)
(72) Erfinder: FÄRBER, Manfred, 82407 Wielenbach (DE)
(74) Vertreter: Fischer & Konnerth
(86) Internationale Anmeldenummer: PCT/EP2010/000012
(87) Internationale Veröffentlichungsnummer: WO 2010/089008

(56) Entgegenhaltungen:
- EP-A1- 2 017 108
- WO-A2-03/024730
- DE-A1- 3 417 098
- DE-A1- 3 930 756
- DE-A1-102007 021 005

## Beschreibung

Die Erfindung betrifft eine Mechanik für ein verstellbares Karosseriebauteil eines Fahrzeugs gemäß dem Oberbegriff des Patentanspruchs 1.

Die Erfindung ist für eine Betätigung von Karosseriebauteilen von Fahrzeugen verwendbar, die außer einer Schwenkbewegung auch eine Verschiebebewegung ausführen können. Dies können beispielsweise Betätigungsmechaniken für Deckel von Schiebehebedächern oder für Schwenk-Schiebetüren oder für Abdeckklappen sein. Betätigungsmechaniken für Deckel von Schiebehebedächern weisen bislang in aller Regel außer einem an Führungsschienen verschiebbaren Antriebsschlitten und an einem bewegbaren Deckel angeordneten Führungsbahnen zumindest einen zusätzlichen Schwenkhebel auf.

Aus der DE 10 2007 021 005 A1 ist ein als Deckel eines Schiebehebedachs ausgebildetes Karosseriebauteil bekannt, bei dem der in der Schließposition eine Dachöffnung verschließende Deckel zum Öffnen entweder mit seiner Hinterkante durch Schwenken um eine nahe der Vorderkante angeordnete Schwenkachse über das feste Fahrzeugdach in eine Lüfterposition ausstellbar oder nach Absenken seiner Hinterkante zum Freilegen der Dachöffnung nach hinten unter das feste Fahrzeugdach verschiebbar ist. Um den Deckel während der Schwenkbewegung in die Lüfterposition oder beim Absenken in die Schließposition oder in die Ausgangsstellung vor Beginn der Verschiebebewegung mit seiner Schwenkachse in einer definierten Lage zu sichern und eine vorzeitige Verschiebung zu verhindern, ist die Mechanik des Deckels mit einem speziellen, von der Ausstell- und Verschiebemechanik unabhängigen Riegelelement versehen.

Der Erfindung liegt die Aufgabe zugrunde, eine vereinfachte Mechanik für ein verstellbares Karosseriebauteil, insbesondere für einen Deckel eines Schiebehebedachs zu schaffen.

Diese Aufgabe wird erfindungsgemäß durch die Merkmale des Patentanspruchs 1 gelöst. Vorteilhafte Ausgestaltungen der Erfindung sind in den Unteransprüchen angegeben.

Die Erfindung sieht im Kern vor, dass die als Ausstell- und Verschiebemechanik gebildete Mechanik zum Schwenken und Verschieben des Karosseriebauteils einen verschiebbaren Schlitten aufweist, der mit wenigstens zwei zweiten Führungselementen versehen ist, die in bestimmten Bewegungsabschnitten (bevorzugt in der Schließposition und während der Schwenkbewegungen) mit dem Karosseriebauteil zugeordneten ersten Führungselementen (Stegführungen) und die in einem anderen Bewegungsabschnitt (bevorzugt beim Verschieben des Karosseriebauteils) mit einem anderen dem Karosseriebauteil zugeordneten ersten Führungselement (Steuerkulisse oder Steuernocke) zusammenwirken, wobei zumindest ein Teil der zweiten Führungselemente mit dem als Stegführung ausgebildeten ersten Führungselement außer Eingriff gerät, sobald zumindest eines der zweiten Führungselemente mit dem als Steuerkulisse ausgebildeten weiteren ersten Führungselement im Eingriff steht. Dadurch werden eine gleitende Übergabe und eine jederzeit stabile, eindeutige Abstützung des Karosseriebauteils bei dessen Schwenkbewegung und bei dessen Schiebebewegung gewährleistet.

Somit sind für die Ausstell- und Verschiebemechanik des Karosseriebauteils und für die Verriegelung im einfachsten Fall nur zwei Bauteile notwendig: ein einteiliger Schlitten mit den daran angeordneten zweiten Führungselementen und eine Deckelkulisse, an der eine Stegführung und eine Steuerkulisse oder Steuernocke als erste Führungselemente angeordnet sind. Alternativ können sich die Stegführung und die Steuerkulisse jedoch auch aus mehreren Bauteilen zusammensetzen, um die Herstellung zu vereinfachen oder um eine modulare Verwendbarkeit für verschiedene Karosseriebauteile zu ermöglichen. Das wenigstens eine Verriegelungselement wird beim Erfindungsgegenstand gemeinsam mit den Führungselementen der Ausstell- und Verschiebemechanik, frei von zusätzlichen Hebeln, wie diese bislang erforderlich waren, unmittelbar von der Verschiebebewegung des Antriebsschlittens betätigt.

Die Begriffe "Mechanik" oder "Ausstell- und Verschiebemechanik" umfassen den vorzugsweise als Antriebsschlitten ausgebildeten Schlitten und die ersten und zweiten Führungselemente.

Gemäß einer für alle Ausführungsbeispiele vorteilhaften Ausführungsform ist vorgesehen, dass das wenigstens eine Verriegelungselement gemeinsam mit den ersten Führungselementen an einem dem Karosseriebauteil zugeordneten Bauteil angeordnet ist. Das dem Karosseriebauteil zugeordnete Bauteil wird bevorzugt von einem Träger gebildet, der bevorzugt als Kunststoff-Spritzteil oder als Verbundbauteil aus einem oder mehreren Blechen mit einer zumindest partiellen Umspritzung aus Kunststoff gebildet ist. Die Stegführung, die Verriegelungselemente und bei drei von vier Ausführungsbeispielen auch die Steuerkulisse sind dabei bevorzugt einstückig an dem Träger ausgebildet. In der Regel ist jeweils ein solcher Träger symmetrisch zu einer Mittellängsebene zu beiden Seiten des Karosseriebauteils angeordnet.

Gemäß einer weiteren für alle Ausführungsbeispiele vorteilhaften Ausgestaltung ist vorgesehen, dass der Antriebschlitten mit einem die Stegführung von unten umgreifenden unteren zweiten Führungselement und einem die Stegführung von oben umgreifenden oberen zweiten Führungselement bevorzugt einstückig ausgebildet ist.

Gemäß einem weiteren - dem dritten - Ausführungsbeispiel ist auch eine mit einer Steuernocke am Träger zusammenwirkende Steuerkulisse als weiteres zweites Führungselement am Schlitten ausgebildet. Die zweiten Führungselemente sind beispielsweise bei einer Herstellung des Schlittens in Form eines Kunststoff-Spritzteils oder als Verbundbauteil aus einem oder mehreren Blechen mit einer zumindest partiellen Umspritzung aus Kunststoff kostengünstig mit zu erzeugen.

Gemäß einer weiteren vorteilhaften Ausgestaltung der Erfindung (in der ersten, der dritten und der vierten Ausführungsform) ist vorgesehen, dass zwischen den ersten Führungselementen (Stegführung und Steuerkulisse bzw. Steuernocke) in Längsrichtung eine Lücke vorgesehen ist. Diese Lücke bildet einen Abstand zwischen Stegführung und Steuerkulisse, in dem sich das untere zweite Führungselement und/oder das obere zweite Führungselement befinden, während zumindest eines der zweiten Führungselemente bei einer Verschiebebewegung des Karosseriebauteils mit einem ersten Führungselement am Karosseriebauteil im Eingriff steht. Alternativ dazu ist jedoch - wie im zweiten Ausführungsbeispiel gezeigt - auch eine durchgehende Stegführung realisierbar, unterhalb der im hinteren Teil die Steuerkulisse angeordnet bzw. ausgebildet ist. Gemäß der vierten Ausführungsform genügen zwei zweite Führungselemente am Antriebsschlitten, die zunächst (in Schließposition oder bei Schwenkbewegungen des Karosseriebauteils) die Stegführung umgreifen und von denen sich das untere zweite Führungselement für eine Verschiebung des Karosseriebauteils an eine Führungsfläche einer Kulisse anlegt.

Bevorzugt ist weiterhin vorgesehen, dass das Verriegelungselement von wenigstens einem, bevorzugt von mehreren in Längsrichtung voneinander beabstandeten Steuerstegen gebildet wird, die jeweils mit einer Aussparung an der Führungsschiene zusammenwirken. Durch die mehreren Steuerstege ist der Übergang zwischen Schwenkbewegung und Verschiebebewegung noch besser steuerbar. Bevorzugt ist dabei zumindest ein vorderer Steuersteg vor dem vorderen ersten Führungselement und wenigstens ein hinterer Steuersteg hinter dem hinteren ersten Führungselement angeordnet. Die Steuerstege sind bevorzugt gemeinsam mit den ersten Führungselementen einstückig am Träger ausgebildet.

Nachfolgend wird eine erfindungsgemäße Mechanik am Beispiel eines Karosseriebauteils, das von einem Deckel eines Schiebehebedachs eines Fahrzeugs gebildet wird, anhand von vier Ausführungsbeispielen unter Bezugnahme auf die Zeichnung näher erläutert. Es zeigt:
- Fig. 1: eine schematische perspektivische Teil-Ansicht eines Fahrzeugs;
- Fig. 2: einen schematischen Längsschnitt gemäß der Schnittlinie II-II in Fig. 1 durch die Mechanik und die Führung des Deckels eines ersten Ausführungsbeispiels bei geschlossenem Fahrzeugdach;
- Fig. 3: einen schematischen Längsschnitt durch die Mechanik und die Führung des Deckels des ersten Ausführungsbeispiels bei in Lüfterposition ausgestelltem Deckel;
- Fig. 4: einen schematischen Längsschnitt durch die Mechanik und die Führung des Deckels des ersten Ausführungsbeispiels bei mit seiner Hinterkante abgesenktem Deckel;
- Fig. 5: eine vergrößerte Detailansicht des hinteren Teils der Mechanik des Deckels des ersten Ausführungsbeispiels bei geschlossenem Fahrzeugdach;
- Fig. 6: eine vergrößerte Detailansicht des hinteren Teils der Mechanik des Deckels des ersten Ausführungsbeispiels bei Beginn der Absenkbewegung der Deckelhinterkante;
- Fig. 7: eine vergrößerte Detailansicht des hinteren Teils der Mechanik des Deckels des ersten Ausführungsbeispiels bei fortschreitender Absenkbewegung der Deckelhinterkante;
- Fig. 8: eine vergrößerte Detailansicht des hinteren Teils der Mechanik des Deckels des ersten Ausführungsbeispiels bei weiter fortschreitender Absenkbewegung der Deckelhinterkante;
- Fig. 9: eine vergrößerte Detailansicht des hinteren Teils der Mechanik des Deckels des ersten Ausführungsbeispiels bei vollendeter Absenkbewegung der Deckelhinterkante zu Beginn der Verschiebung des Deckels;
- Fig.10: einen schematischen Längsschnitt gemäß der Schnittlinie II-II in Fig. 1 durch die Mechanik und die Führung des Deckels eines zweiten Ausführungsbeispiels bei geschlossenem Fahrzeugdach;
- Fig. 11: einen schematischen Längsschnitt durch die Mechanik und die Führung des Deckels des zweiten Ausführungsbeispiels bei in Lüfterposition ausgestelltem Deckel;
- Fig. 12: einen schematischen Längsschnitt durch die Mechanik und die Führung des Deckels des zweiten Ausführungsbeispiels bei mit seiner Hinterkante abgesenktem Deckel;
- Fig. 13: eine vergrößerte Detailansicht des hinteren Teils der Mechanik des Deckels des zweiten Ausführungsbeispiels bei geschlossenem Fahrzeugdach;
- Fig. 14: eine vergrößerte Detailansicht des hinteren Teils der Mechanik des Deckels des zweiten Ausführungsbeispiels bei Beginn der Absenkbewegung der Deckelhinterkante;
- Fig. 15: eine vergrößerte Detailansicht des hinteren Teils der Mechanik des Deckels des zweiten Ausführungsbeispiels bei fortschreitender Absenkbewegung der Deckelhinterkante;
- Fig. 16: eine vergrößerte Detailansicht des hinteren Teils der Mechanik des Deckels des zweiten Ausführungsbeispiels bei weiter fortschreitender Absenkbewegung der Deckelhinterkante;
- Fig. 17: eine vergrößerte Detailansicht des hinteren Teils der Mechanik des Deckels des zweiten Ausführungsbeispiels bei noch weiter fortschreitender Absenkbewegung der Deckelhinterkante;
- Fig. 18: eine vergrößerte Detailansicht des hinteren Teils der Mechanik des Deckels des zweiten Ausführungsbeispiels bei vollendeter Absenkbewegung der Deckelhinterkante zu Beginn der Verschiebung des Deckels;
- Fig.19: einen schematischen Längsschnitt gemäß der Schnittlinie II-II in Fig. 1 durch die Mechanik und die Führung des Deckels eines dritten Ausführungsbeispiels bei geschlossenem Fahrzeugdach;
- Fig. 20: einen schematischen Längsschnitt durch die Mechanik und die Führung des Deckels des dritten Ausführungsbeispiels bei in Lüfterposition ausgestelltem Deckel;
- Fig. 21: einen schematischen Längsschnitt durch die Mechanik und die Führung des Deckels des dritten Ausführungsbeispiels bei mit seiner Hinterkante abgesenktem Deckel;
- Fig. 22: eine vergrößerte Detailansicht des hinteren Teils der Mechanik des Deckels des dritten Ausführungsbeispiels bei geschlossenem Fahrzeugdach;
- Fig. 23: eine vergrößerte Detailansicht des hinteren Teils der Mechanik des Deckels des dritten Ausführungsbeispiels bei Beginn der Absenkbewegung der Deckelhinterkante;
- Fig. 24: eine vergrößerte Detailansicht des hinteren Teils der Mechanik des Deckels des dritten Ausführungsbeispiels bei fortschreitender Absenkbewegung der Deckelhinterkante;
- Fig. 25: eine vergrößerte Detailansicht des hinteren Teils der Mechanik des Deckels des dritten Ausführungsbeispiels bei weiter fortschreitender
- Fig. 26: eine vergrößerte Detailansicht des hinteren Teils der Mechanik des Deckels des dritten Ausführungsbeispiels bei vollendeter Absenkbewegung der Deckelhinterkante zu Beginn der Verschiebung des Deckels;
- Fig. 27: eine vergrößerte Detailansicht des hinteren Teils der Mechanik des Deckels eines vierten Ausführungsbeispiels bei geschlossenem Fahrzeugdach;
- Fig. 28: eine vergrößerte Detailansicht des hinteren Teils der Mechanik des Deckels des vierten Ausführungsbeispiels bei Beginn der Absenkbewegung der Deckelhinterkante;
- Fig. 29: eine vergrößerte Detailansicht des hinteren Teils der Mechanik des Deckels des vierten Ausführungsbeispiels bei fortschreitender Absenkbewegung der Deckelhinterkante;
- Fig. 30: eine vergrößerte Detailansicht des hinteren Teils der Mechanik des Deckels des vierten Ausführungsbeispiels bei weiter fortschreitender Absenkbewegung der Deckelhinterkante; und
- Fig. 31: eine vergrößerte Detailansicht des hinteren Teils der Mechanik des Deckels des vierten bei vollendeter Absenkbewegung der Deckelhinterkante zu Beginn der Verschiebung des Deckels.

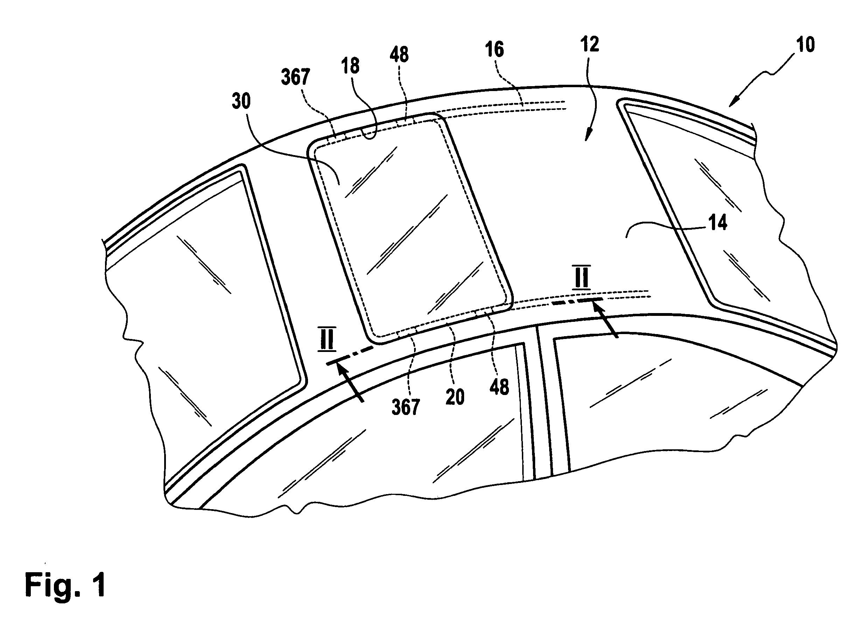

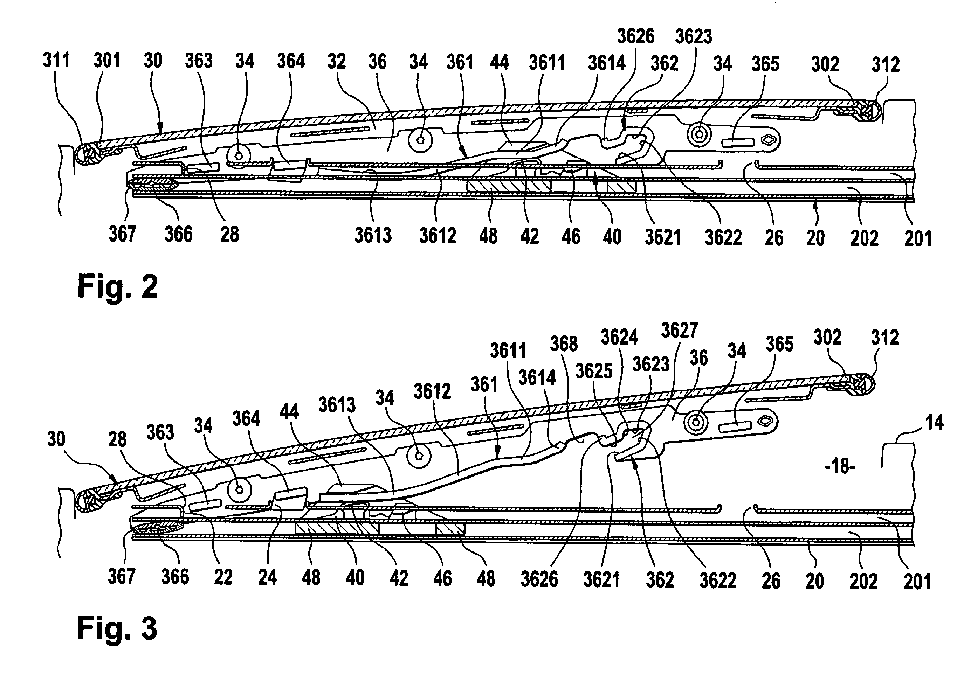

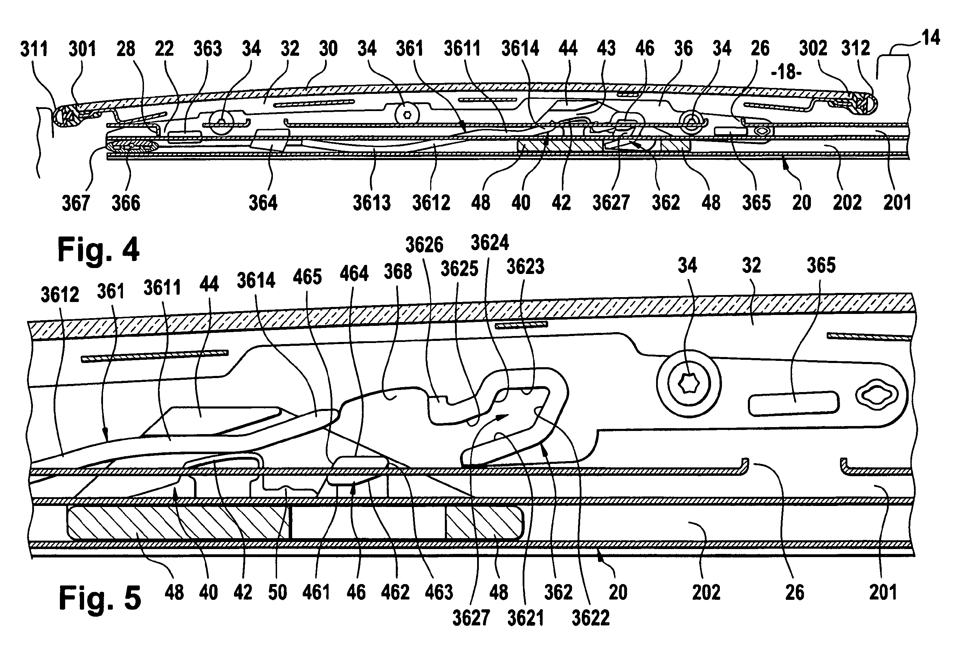

Das in Fig. 1 gezeigte Fahrzeug 10 weist ein Fahrzeugdach 12 auf, in dem eine Dachöffnung 18 ausgebildet ist. Die Dachöffnung 18 ist mittels eines Deckels 30 verschließbar (siehe Figur 1) oder durch Ausstellen der Hinterkante 302 des Deckels 30 in eine Lüfterposition (siehe Figur 3) oder durch Absenken der Hinterkante 302 (siehe Figur 4) und anschließendes Verschieben unter einen hinter der Dachöffnung 18 angeordneten festen Dachbereich 14 des Fahrzeugdachs 12 zumindest teilweise freilegbar. Der Deckel 30 dient als Beispiel für das mittels der erfindungsgemäßen Mechanik bewegbare Karosseriebauteil.

Der Deckel 30 weist an seiner Vorderkante 301 eine Dichtung 311 und an seiner Hinterkante 302 eine Dichtung 312 auf, durch welche bei geschlossenem Deckel 30 ein Eindringen von Wasser in die Dachöffnung 18 verhindert wird.

Der Deckel 30 ist an einem Dachrahmen 16 gelagert, der unterhalb des festen Fahrzeugdachs 12 angeordnet ist, der die Dachöffnung 18 an ihren Rändern umgibt und sich nach hinten unter den festen Dachbereich 14 erstreckt. Am Dachrahmen 16 sind zu beiden Seiten der Dachöffnung 18 parallel zu den Seitenholmen des Fahrzeugs 10 Führungsschienen 20 angeordnet, in denen die nachfolgend detailliert nur für eine Fahrzeugseite beschriebene Mechanik des Deckels 30 verschiebbar gelagert ist. Auf der anderen Fahrzeugseite ist symmetrisch zu einer Mittellängsebene des Fahrzeugdachs dieselbe Anordnung vorhanden. Dies gilt auch für die übrigen, weiter unten beschriebenen Ausführungsbeispiele.

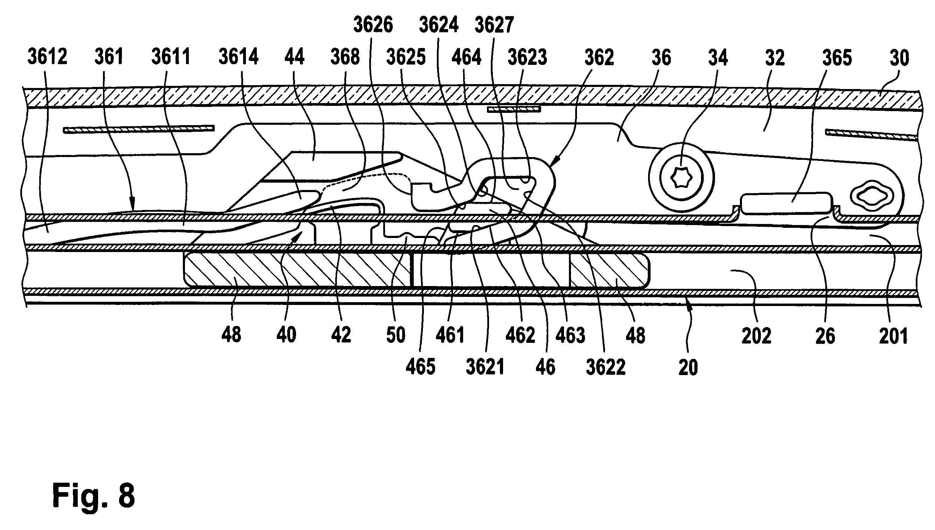

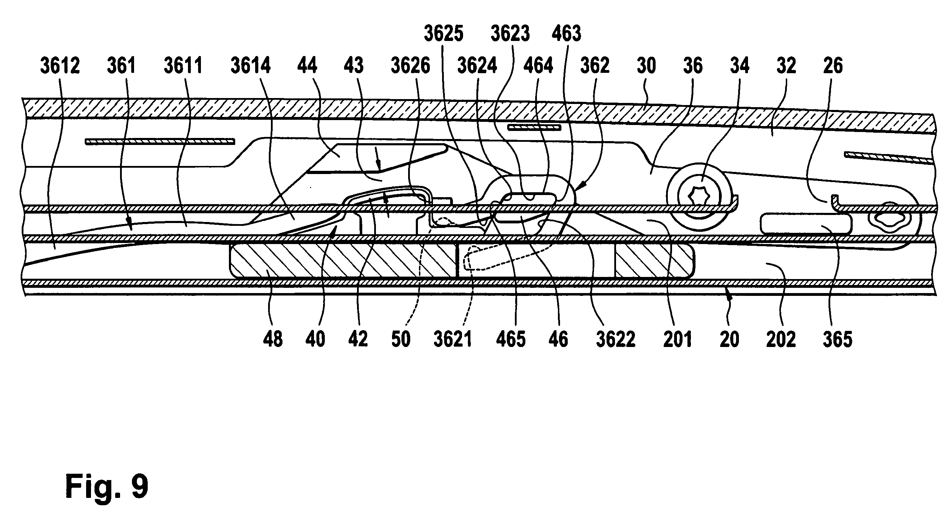

Die Führungsschiene 20 weist eine obere Führungsbahn 201 und eine untere Führungsbahn 202 auf. Im oberen Steg der oberen Führungsbahn 201 sind in Fahrzeuglängsrichtung beabstandet voneinander von vorne nach hinten eine erste Aussparung 22, eine zweite Aussparung 24 und eine dritte Aussparung 26 vorgesehen. Die Aussparungen 22, 24 und 26 dienen der Aufnahme von Verriegelungelementen, die als Steuerstege 363, 364 und 365 ausgebildet und an einem als Deckelträger 36 ausgebildeten Träger angeordnet sind. Die Steuerstege 363 und 364 stehen in der Schließposition und in der Lüfterposition des Deckels 30 mit den ihnen zugeordneten Aussparungen 22 bzw. 24 im Eingriff (siehe Figuren 2 und 3) und verhindern dadurch eine Verschiebung des Deckels 30 während dessen Schwenkbewegung. Der hintere Steuersteg 365 taucht beim Absenken der Hinterkante 302 des Deckels 30 durch die hintere Aussparung 26 durch und tritt in die obere Führungsbahn 201 ein (siehe Figur 8 und 9). Am vorderen Ende der vorderen Aussparung 22 ist ein nach unten in die obere Führungsbahn 201 hinein abgewinkelter Anschlag 28 vorgesehen, an welchen der vordere Steuersteg 363 bei einer Verschiebung in Schließrichtung des Deckels 30 anstößt.

Der Deckelträger 36 ist mittels dreier Befestigungspunkte 34, beispielsweise durch Schrauben mit einem am Deckel 30 angeordneten Deckelinnenblech 32 verbunden. Am Deckelträger 36 sind auch wesentliche Teile der Betätigungsmechanik des Deckels 30 angeordnet. Die Betätigungsmechanik des Deckels 30 weist zwei erste Führungselemente 361 und 362 auf, die hier von einer Stegführung 361 und einer beabstandet dazu hinter dieser angeordneten Steuerkulisse 362 gebildet werden. Die ersten Führungselemente (Stegführung 361 und Steuerkulisse 362) werden von drei zweiten Führungselementen 42, 44, 46 betätigt, die an einem Antriebsschlitten 40 angeordnet sind. Der als Antriebsschlitten 40 ausgebildete Schlitten steht mittels Gleitelementen 48 mit der unteren Führungsbahn 202 der Führungsschiene 20 im Eingriff. Er wird von einem nicht dargestellten Antrieb mittels eines flexiblen, zug- und druckfest geführten Antriebskabels in der unteren Führungsbahn 202 der Führungsschiene 20 verschoben.

Die Stegführung 361 wird von einem unteren zweiten Führungselement 42 an ihrer Unterseite und von einem oberen zweiten Führungselement 44 an ihrer Oberseite umgriffen. Das untere zweite Führungselement 42 und das obere zweite Führungselement 44 bilden einen Führungsspalt 43, welcher in etwa der Dicke der Stegführung 361 entspricht, so dass diese vorn unteren zweiten Führungselement 42 und vorn oberen zweiten Führungselement 44 in allen Bewegungsphasen, die die Schließposition und Schwenkbewegungen des Deckels 30 betreffen, mit geringem Spiel in Form einer Gleitführung umgeben ist.

Die Stegführung 361 wird in der Schließposition des Deckels 30 gemäß Figur 2 in einem ersten, im Wesentlichen horizontalen Abschnitt 3611 von den zweiten Führungselementen 42 und 44 umgriffen. An den Abschnitt 3611 schließt sich nach vorn ein leicht schräg nach vorn abfallender Abschnitt 3612 der Stegführung 361 an. An diesen schließt sich nach vorn ein dritter Abschnitt 3613 an, der im Ausführungsbeispiel einen leicht nach unten gewölbten Bogen bildet. Der Abschnitt 3612 dient dem Ausstellen des Deckels 30 in dessen Lüfterposition. In der Lüfterposition wird der Deckel 30 durch den dritten Abschnitt 3613 der Stegführung 361 stabil abgestützt (siehe Figur 3).

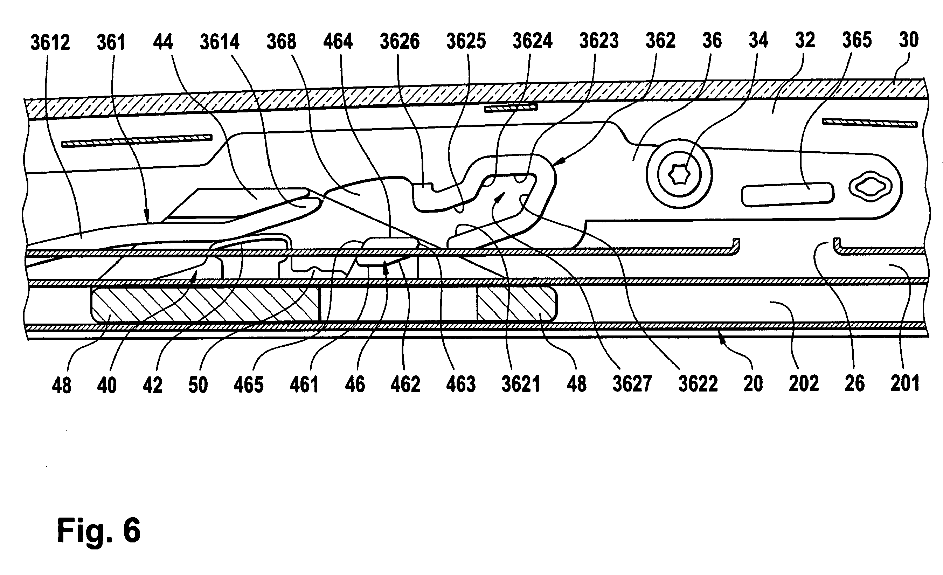

An den ersten Abschnitt 3611 schließt sich nach hinten ein leicht schräg ansteigender vierter Abschnitt 3614 der Stegführung 361 an. Der vierte Abschnitt 3614 dient dem Absenken der Hinterkante 302 des Deckels 30 (siehe Fign. 6 bis 8).

An das hintere Ende des hinteren Abschnitts 3614 der Stegführung 361 schließt sich nach einer Lücke 368 die ebenfalls am Deckelträger 36 angeordnete Steuerkulisse 362 als weiteres erstes Führungselement an. Wie die Stegführung 361 kann auch die Steuerkulisse 362 vorzugsweise einstückig mit dem Deckelträger 36 ausgebildet sein. Die Steuerkulisse 362 ist nach vorne unten offen und wird begrenzt von einem an die Öffnung nach hinten anschließenden, leicht schräg ansteigenden ersten Abschnitt 3621, einem daran anschließenden, stärker schräg nach oben geneigten zweiten Abschnitt 3622, einem in etwa horizontal verlaufenden oberen dritten Abschnitt 3623, einem an diesen anschließenden, schräg nach vorne abfallenden vierten Abschnitt 3624, einem nach vorne an diesen anschließenden, leicht schräg abfallenden Abschnitt 3625 und einem nach vorne an diesen anschließenden sechsten Abschnitt 3626, der in etwa rechtwinklig nach oben abgebogen ist. Der erste Abschnitt 3621 und der fünfte Abschnitt 3625 sind im Wesentlichen parallel zueinander angeordnet. Ebenso sind der zweite Abschnitt 3622 und der vierte Abschnitt 3624 im Wesentlichen parallel zueinander angeordnet. Die Abschnitte 3621 bis 3625 der Steuerkulisse 362 begrenzen eine schräg nach vorne unten offene Aufnahme 3627 der Steuerkulisse 362, die zur Aufnahme des hinteren zweiten Führungselements 46 dient, welches wie das untere zweite Führungselement 42 und das obere zweite Führungselement 44 am Schlitten 40 angeordnet oder vorzugsweise einstückig mit diesem ausgebildet ist.

Der Deckel 30 wird im vorderen Bereich nahe seiner Vorderkante 301 durch ein am Deckelträger 36 angeordnetes vorderes Gleitelement 367 abgestützt, das in der unteren Führungsbahn 202 der Führungsschiene 20 geführt ist und eine Schwenkachse 366 des Deckels 30 definiert.

Das hintere zweite Führungselement 46 weist an seiner Unterseite eine erste, in Schließposition des Deckels 30 in etwa horizontale Fläche 461 auf, an die sich nach hinten eine leicht schräg ansteigende Fläche 462 anschließt, an welche sich eine weitere, stärker schräg nach oben geneigte Fläche 463 anschließt. Das hintere zweite Führungselement 46 wird nach oben von einer in Schließposition des Deckels 30 in etwa horizontalen Fläche 464 begrenzt, an welche sich nach vorn eine schräg nach vorn abfallende Fläche 465 anschließt. Die Flächen 463 und 465 sind im Wesentlichen parallel zueinander angeordnet.

Die obere Fläche 464 des hinteren zweiten Führungselements 46 ist etwas unterhalb der oberen Deckfläche des unteren zweiten Führungselements 42 angeordnet. Zwischen dem unteren zweiten Führungselement 42 und dem hinteren zweiten Führungselement 46 befindet sich in einem gegenüber der oberen Deckfläche 464 abgesenkten Bereich des Antriebsschlittens 40 auf dessen dem Deckel 30 zugewandten Oberfläche ein Dämpfungselement 50, das beispielsweise aus einem mit angespritzten oder aufgeklebten weicheren Kunststoff besteht. Das Dämpfungselement 50 dient der Dämpfung des sich nach unten bewegenden Deckels 30, wenn das hintere zweite Führungselement 46 beim Übergang von der Figur 8 in die Figur 9 vollständig in die Aufnahme 3627 einfährt. Wie in Figur 9 zu sehen, legt sich dabei der vordere Teil des fünften Abschnitts 3625 der Steuerkulisse 362 von oben auf dieses Dämpfungselement 50.

Nachfolgend wird ein vollständiger Bewegungszyklus des Deckels 30 anhand der Zeichnungen beschrieben. In der Schließposition gemäß Figur 2 wird die Stegführung 361 in ihrem ersten Abschnitt 3611 vorn unteren zweiten Führungselement 42 und vorn oberen zweiten Führungselement 44 umgriffen. Der vordere Steuersteg 363 befindet sich in der vorderen Aussparung 22 und der zweite Steuersteg 364 befindet sich in der zweiten Aussparung 24 der Führungsschiene 20. Der Deckel 30 wird dadurch an einer Verschiebung in Längsrichtung gehindert.

Zum Ausstellen des Deckels 30 mit seiner Hinterkante 302 in die in Figur 3 dargestellte Lüfterposition wird der Antriebsschlitten 40 von einem nicht gezeigten, vorzugsweise elektrischen Antrieb mittels eines nicht gezeigten, am Antriebsschlitten 40 befestigten Antriebskabel längs der Führungsschiene 20 nach vorne bewegt. Beim Durchfahren des zweiten Abschnitts 3612 der Stegführung 361 bewegen das untere zweite Führungselement 42 und das obere zweite Führungselement 44 den Deckel 30 in die Lüfterposition. In dieser Position umgreifen das untere zweite Führungselement 42 und das obere zweite Führungselement 44 den dritten Abschnitt 3613 der Stegführung 361. Trotz der gekippten Stellung des Deckels 30 ist der vordere Steuersteg 363 weiterhin noch im Eingriff mit der vorderen Aussparung 22 der Führungsschiene 20 und ebenso ist der eine etwas größere Bauhöhe aufweisende zweite Steuersteg 364 weiterhin im Eingriff mit der zweiten Aussparung 24 der Führungsschiene 20. Dadurch wird der Deckel 30 weiterhin an einer Verschiebung in Längsrichtung gehindert. Zum Absenken der Deckelhinterkante 302 in die Schließposition fährt der Antriebsschlitten 40 wieder in die Ausgangsposition, in der das untere zweite Führungselement 42 und das obere zweite Führungselement 44 die Stegführung 361 im Bereich des ersten Abschnitts 3611 umgreifen.

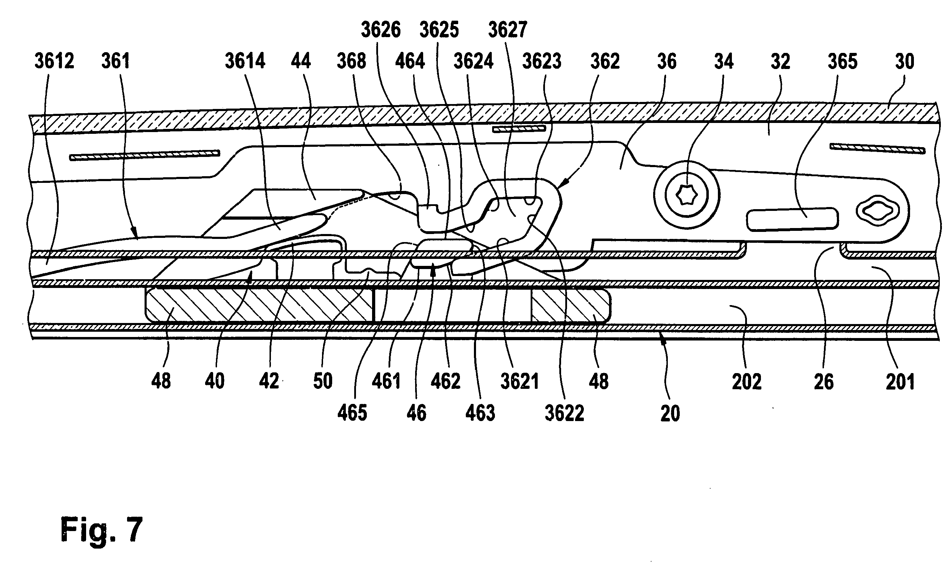

Zum Absenken der Deckelhinterkante 302 nach unten unterhalb des Niveaus des hinteren festen Dachbereichs 14 des Fahrzeugdachs 12 wird der Antriebsschlitten 40 ausgehend von der Schließposition nach hinten bewegt. Dabei umgreifen das untere zweite Führungselement 42 und das obere zweite Führungselement 44 den vierten Abschnitt 3614 der Stegführung 361 und schwenken den Deckel 30 in eine um die Schwenkachse 366 nach hinten unten gekippte Stellung. Wenn sich das untere zweite Führungselement 42 und das obere zweite Führungselement 44 dem hinteren Ende der Stegführung 361 nähern, nähert sich gleichzeitig das hintere zweite Führungselement 46 der Steuerkulisse 362. Noch bevor das untere zweite Führungselement 42 und das obere zweite Führungselement 44 außer Eingriff mit dem hinteren Ende der Stegführung 361 geraten, tritt das hintere zweite Führungselement 46 in die Steuerkulisse 362 ein, wobei sich zunächst die schräge Fläche 462 desselben auf den schrägen ersten Abschnitt 3621 der Steuerkulisse schiebt (Figur 7).

Bei weiterer Verschiebung des Antriebsschlittens 40 nach hinten legt sich zusätzlich die obere Fläche 464 des hinteren zweiten Führungselements 46 an den fünften Abschnitt 3625 der Steuerkulisse 362 an, so dass der Deckel 30 jetzt vollständig und eindeutig durch das hintere zweite Führungselement 46 im Zusammenspiel mit der Steuerkulisse 362 gehalten ist (Figur 8). Gleichzeitig sind das untere zweite Führungselement 42 und das obere zweite Führungselement 44 soweit über das hintere Ende der Stegführung 361 hinaus gefahren, dass sie außer Eingriff mit der Stegführung 361 sind. Zur selben Zeit tritt der hintere Steuersteg 365 bei der Absenkbewegung des Deckels 30 durch die hintere Aussparung 26 in der Führungsschiene 20 nach unten in deren obere Führungsbahn 201 ein.

In Figur 9 ist die Hinterkante 302 des Deckels 30 vollständig abgesenkt und die Verschiebung des Deckels nach hinten unter den festen Dachbereich 14 hat bereits begonnen, wie an der schon leicht verschobenen Position des hinteren Steuersteges 365 zur hinteren Aussparung 26 in der Führungsschiene 20 ersichtlich ist. Das hintere zweite Führungselement 46 liegt mit seiner Fläche 463 am zweiten Abschnitt 3622, mit seiner Fläche 464 am dritten Abschnitt 3623 und mit seiner Fläche 465 am vierten Abschnitt 3624 der Steuerkulisse 362 an. Da in dieser Position alle Steuerstege 363, 364 und 365 durch die Aussparungen 22, 24 und 26 der Führungsschiene 20 nach unten durch getreten sind und nun in der oberen Führungsbahn 201 der Führungsschiene 20 verschiebbar geführt sind, wird bei einer weiteren Bewegung des Antriebsschlittens 40 nach hinten der Deckel 30 durch das hintere zweite Führungselement 46 im Zusammenwirken mit der Steuerkulisse 362 nach hinten verschoben.

Um beim Übergang von der Figur 8 zur Figur 9 beim vollständigen Eintritt des hinteren zweiten Führungselements 46 in die Aufnahme 3627 der Steuerkulisse 362 zu verhindern, dass der Deckelträger 36 zu plötzlich auf den Antriebsschlitten 40 aufschlägt, ist das weiche und elastische Dämpfungselement 50 an der Oberseite des Antriebsschlittens 40 vorgesehen, auf dem die Steuerkulisse 362 mit ihrem fünften Abschnitt 3625 in Figur 9 aufliegt.

Bei der Schließbewegung des Deckels 30 findet der vorstehend beschriebene Bewegungsablauf in umgekehrter Richtung statt. Der Antriebsschlitten 40 nimmt den Deckel 30 dabei soweit nach vorne mit, bis der erste Steuersteg 363 am Anschlag 28 anschlägt, der an der Vorderkante der ersten Aussparung 22 vorgesehen ist. Dadurch kann der Deckel 30 nicht weiter nach vorne verschoben werden und die Schrägfläche 465 des hinteren zweiten Führungselements 46 hebt im Zusammenwirken mit der Schrägfläche am vierten Abschnitt 3624 der Steuerkulisse 362 den Deckelträger 36 nach oben, so dass das untere zweite Führungselement 42 wieder unter das hintere Ende der Stegführung 361 tritt und beim weiteren Verschieben des Antriebsschlittens 40 nach vorn im Zusammenspiel mit dem oberen zweiten Führungselement 44 die Stegführung 361 wieder von oben und unten umgreift.

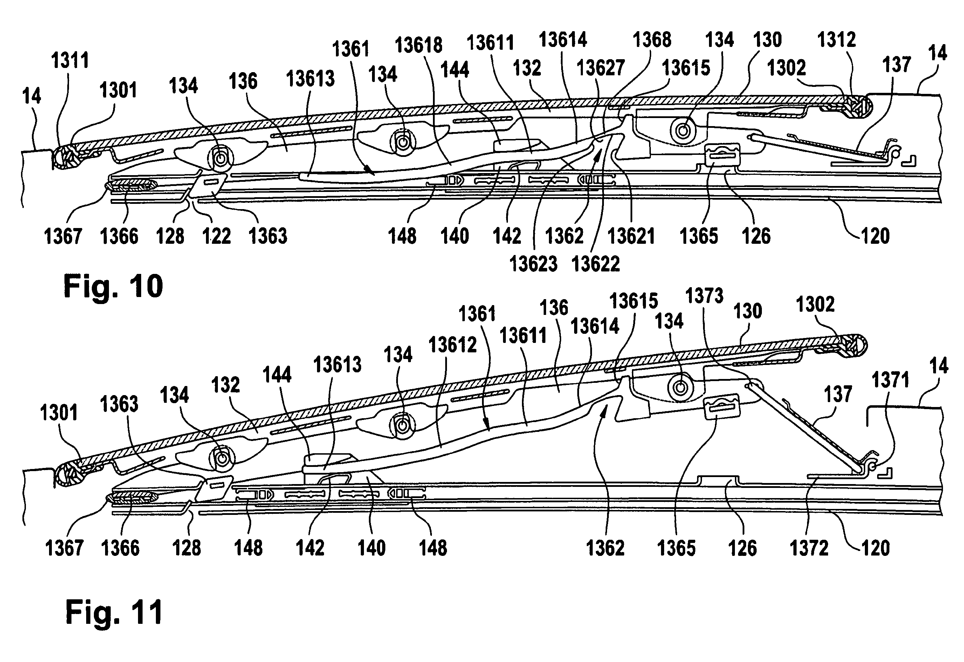

Das zweite Ausführungsbeispiel, das in den Fign. 10 bis 18 dargestellt ist, unterscheidet sich vorn ersten Ausführungsbeispiel gemäß den Fign. 1 bis 9 dadurch, dass die am Deckelträger 136 angeordneten ersten Führungselemente, nämlich die Stegführung 1361 und die Steuerkulisse 1362 einstückig durchlaufend ausgebildet sind. Die zweiten Führungselemente, die am Antriebsschlitten 140 vorgesehen sind, werden in diesem Fall nur von einem unteren zweiten Führungselements 142 und einem oberen zweiten Führungselement 144 gebildet. Das untere zweite Führungselement 142 dient dabei nicht nur zum Umgreifen der Stegführung 1361, sondern auch zum Eingriff in die Steuerkulisse 1362 während der Verschiebebewegung des Deckels 130.

Ein weiterer Unterschied des zweiten Ausführungsbeispiels zum ersten Ausführungsbeispiel besteht darin, dass als Verriegelungselemente zur Sicherung des Deckels 130 gegen eine Längsverschiebung nur ein vorderer Steuersteg 1363 und ein hinterer Steuersteg 1365 vorgesehen sind, die mit einer vorderen Aussparung 122 beziehungsweise einer hinteren Aussparung 126 der Führungsschiene 120 zusammenwirken.

Den übrigen Bauteilen, die denen des ersten Ausführungsbeispiel gleich oder ähnlich sind, wurde zusätzlich eine "1" vorangestellt.

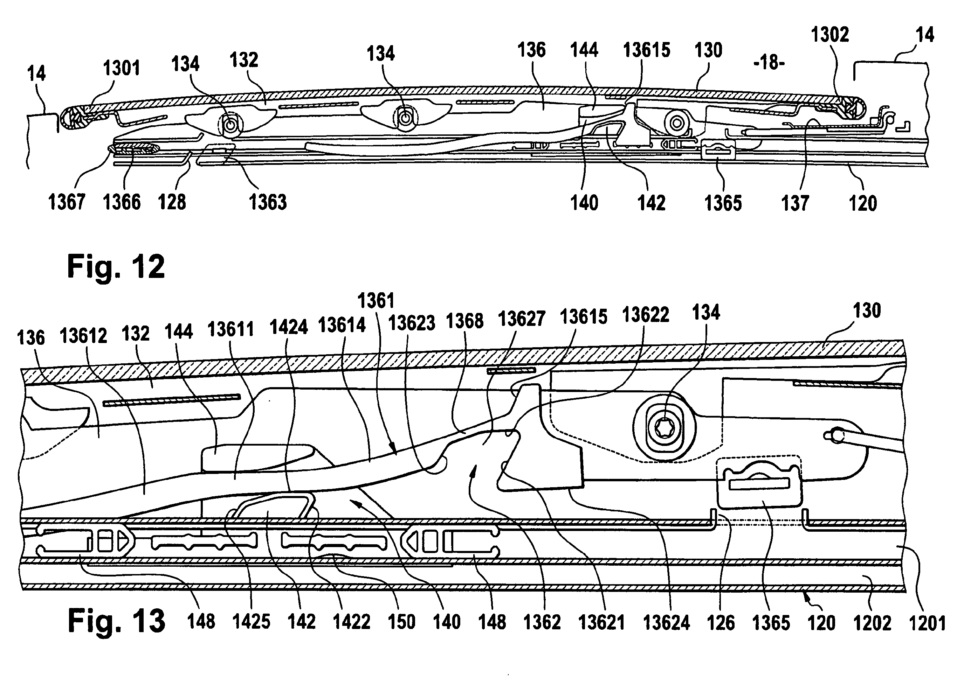

Zusätzlich gezeigt ist beim zweiten Ausführungsbeispiel eine auch bei allen anderen Ausführungsbeispielen vorhandene, beim ersten Ausführungsbeispiel jedoch nicht dargestellte Wasserrinne 137, die unterhalb der Hinterkante 1302 des Deckels 130 mittels eines Schwenklagers 1371 an einem in der Führungsschiene 120 verschiebbaren Schlitten 1372 mit dem Deckel 130 schwenkbar und längsverschiebbar gelagert ist. In ihrem vorderen Bereich ist die Wasserrinne 137 über eine Anlenkung 1373 mit dem Deckelträger 136 schwenkbar gekoppelt, so dass sie, wie aus den Fign. 10 bis 12 ersichtlich, die Schwenkbewegungen des Deckels 130 aus der Schließposition (Figur 10) in die Lüftungsposition (Figur 11) und in die abgesenkte Position (Figur 12) mitmacht.

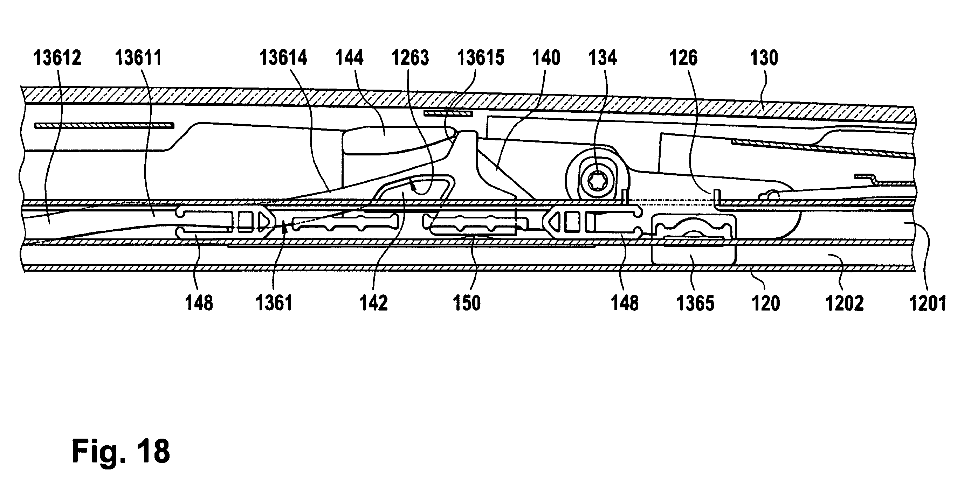

Die Stegführung 1361 weist wie im ersten Ausführungsbeispiel einen ersten Abschnitt 13611 auf, der, wie aus Figur 10 ersichtlich, in der Schließposition des Deckels 130 in etwa horizontal angeordnet ist und in dieser Position vorn unteren zweiten Führungselement 142 und vorn oberen zweiten Führungselement 144 umgriffen wird. Auch die sich nach vorne an den ersten Abschnitt 13611 anschließenden Abschnitte 13612 und 13613 der Stegführung 1361, die während der Ausstellbewegung der Hinterkante 1302 des Deckels 130 von den zweiten Führungselementen 142 und 144 durchfahren werden, gleichen den zweiten und dritten Abschnitten der Stegführung 361 des ersten Ausführungsbeispiels. Dies gilt auch für den vierten Abschnitt 13614 der Stegführung 1361, der sich nach hinten an den ersten Abschnitt 13611 anschließt, und für die Absenkbewegung der Hinterkante 1302 des Deckels 130 in die in Figur 12 dargestellte Position von den zweiten Führungselementen 142 und 144 durchfahren wird. An das hintere Ende des vierten Abschnitts 13614 der Stegführung 1361 schließt sich abweichend von der Stegführung 361 des ersten Ausführungsbeispiels ein nach oben vorstehender Anschlag 13615 an. Gegen diesen Anschlag 13615 fährt das hintere Ende des oberen zweiten Führungselements 144 bei Erreichen der abgesenkten Stellung der Deckelhinterkante 1302 gemäß den Fign. 12 und 18.

In den Fign. 13 bis 18 ist der Bewegungsablauf während der Absenkbewegung der Hinterkante 1302 des Deckels 130 in mehreren Bewegungsphasen vergrößert dargestellt. In dieser vergrößerten Darstellung wird das Zusammenspiel der zweiten Führungselemente 142 und 144 mit der Stegführung 1361 und der Steuerkulisse 1362 deutlich.

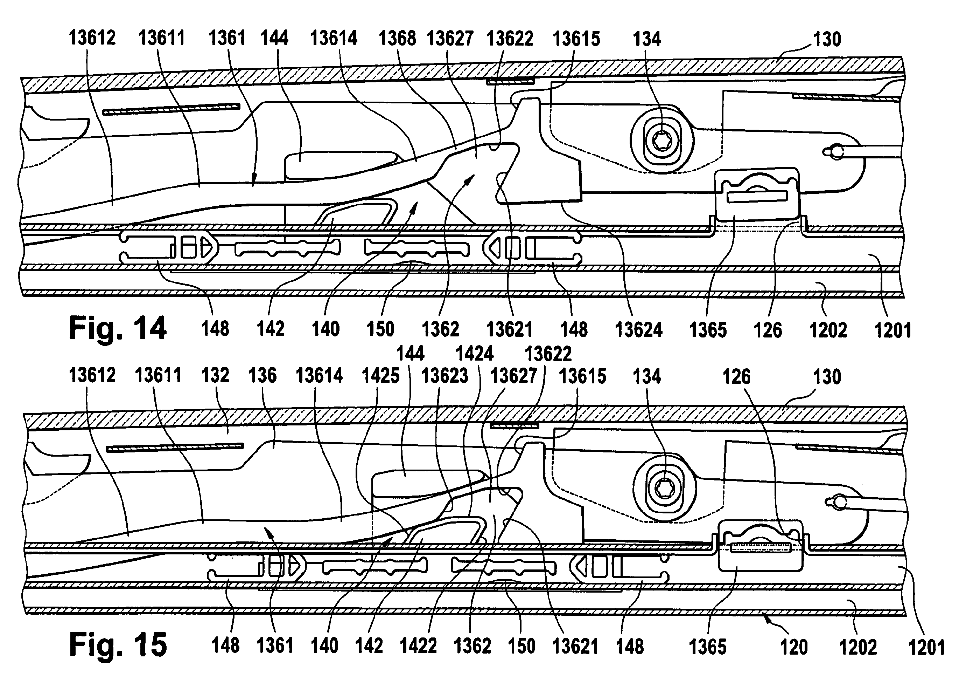

Ausgehend von der in Figur 13 gezeigten Schließposition des Deckels 130, bei der eine obere Fläche 1424 des unteren zweiten Führungselements 142 von unten und bei der eine untere Fläche des oberen zweiten Führungselements 144 von oben am ersten Abschnitt 13611 der Stegführung 1361 anlegt, wird der Antriebsschlitten 140, dessen Gleitelemente 148 bei diesem Ausführungsbeispiel in einer oberen Führungsbahn 1201 der Führungsschienen 120 geführt sind, mittels des nicht dargestellten Antriebskabels längs der Führungsschienen 120 nach hinten geschoben. Beim weiteren Verschieben nach hinten (Fign. 14 und 15) wird der nach hinten ansteigende vierte Abschnitt 13614 von den zweiten Führungselementen 142 und 144 durchfahren, wodurch die Hinterkante 1302 des Deckels 130 in zunehmendem Maße unter das Niveau des hinteren festen Dachbereich 14 abgesenkt wird.

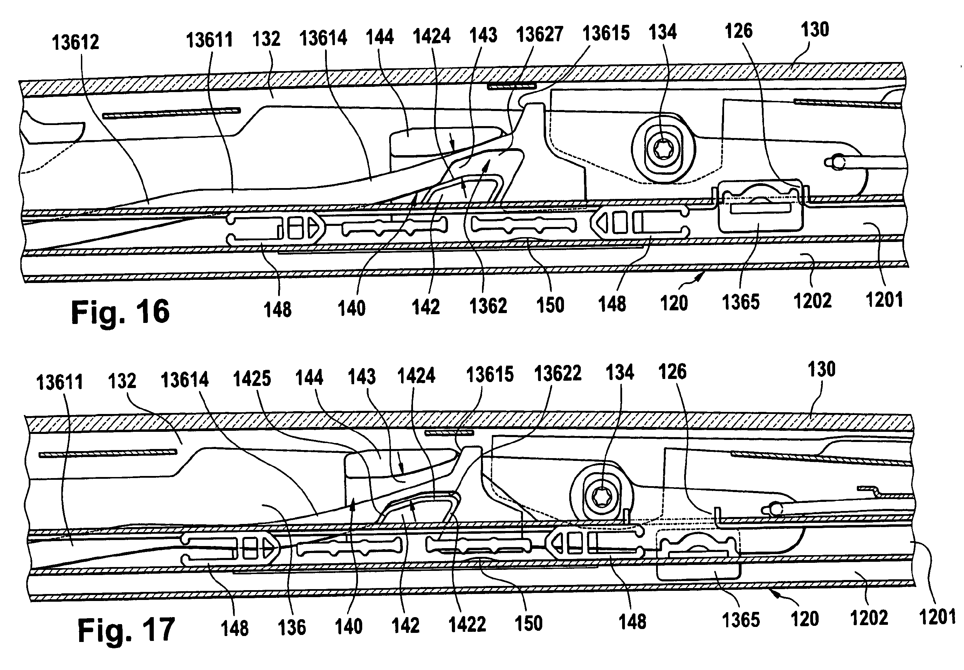

in den Fign. 16 bis 18 erfolgt dann die Übergabe von der Stegführung 1361 an die Steuerkulisse 1362. Wie aus Figur 16 ersichtlich, wird das untere zweite Führungselement 142, das mit einer hinteren, schräg nach hinten ansteigenden Fläche 1422, seiner oberen Fläche 1424 und einer nach vorne schräg abfallenden Fläche 1425 exakt an die Kontur der Steuerkulisse 1362 mit deren hinterem, schräg nach hinten ansteigenden ersten Abschnitt 13621, deren oberem Abschnitt 13622 und deren vorderem, schräg nach vorn abfallenden dritten Abschnitt 13623 angepasst ist, von der unteren Fläche des oberen zweiten Führungselements 1424 solange mit geführt, bis es gemäß Figur 17 in die Steuerkulisse 1362 eingefahren ist.

Die Stegführung 1361 weist in ihrem oberhalb der Steuerkulisse 1362 und vor dem Anschlag 13615 angeordneten Übergangsbereich 1368 eine geringere Dicke auf, so dass das obere zweite Führungselement 144 nach dem Eintreten des unteren zweiten Führungselements 142 in die Steuerkulisse 1362 mit seiner unteren Fläche nicht mehr am vierten Abschnitt 13614 der Stegführung 1361 anliegt. Das obere zweite Führungselement 144 liegt jedoch in dieser Position, wie aus den Fign. 17 und 18 ersichtlich, mit seiner schmalen rückwärtigen Fläche am Anschlag 13615 an.

Während der vorstehend beschriebenen Absenkbewegung der Hinterkante 1302 des Deckels 130 wird gleichzeitig der am Deckelträger 136 angeordnete, in Form eines Gleitelements ausgebildete hintere Steuersteg 1365 mit abgesenkt. Er bleibt dabei solange im Eingriff mit der hinteren Aussparung 126 der Führungsschiene 120, bis das untere zweite Führungselement 142 mit seiner hinteren Fläche 1422 am hinteren ersten Abschnitt 13621 der Steuerkulisse 1362 anliegt (siehe Figuren 16 und 17). Wenn das untere zweite Führungselement 142 vollständig in die Steuerkulisse 1362 eingetreten ist, ist auch der hintere Steuersteg 1365 soweit abgesenkt, dass er durch die hintere Aussparung 126 nach unten hindurch in die untere Führungsbahn 1202 der Führungsschiene 120 eingetreten ist (siehe Figur 18). Dasselbe gilt auch für den vorderen Steuersteg 1363 und dessen Zusammenwirken mit der vorderen Aussparung 122 der Führungsschiene 120 (siehe Figur 12).

Ausgehend von der in den Fign. 12 und 18 dargestellten abgesenkten Position des Deckels 130 wird dieser nachfolgend nach hinten unter den festen Dachbereich 14 verschoben, wodurch die Dachöffnung 18 teilweise oder vollständig freigelegt wird. Die Verschiebung des Deckels 130 erfolgt in diesem Bereich durch den Eingriff des unteren zweiten Führungselements 142 in die Steuerkulisse 1362.

Zum Schließen des Deckels 130 erfolgt der Bewegungsablauf in umgekehrter Reihenfolge. Beim Verschieben des Antriebsschlittens 140 nach vorn stößt der vordere Steuersteg 1363 an den Anschlag 128 an. In dieser Position steht der vordere Steuersteg 1363 exakt unterhalb der vorderen Aussparung 122 und der hintere Steuersteg 1365 exakt unterhalb der hinteren Aussparung 126 in der Führungsschiene 120. Da in dieser Position durch den Anschlag 128 eine weitere Verschiebung nach vorn verhindert wird, drückt die vordere Schrägfläche 1425 des unteren zweiten Führungselements 142 gegen die schräge Fläche 13623 der Steuerkulisse 1362, wodurch der Deckel 130 mit seiner Hinterkante 1302 wieder nach oben bewegt wird. Sobald das untere zweite Führungselement 142 wieder nach vorn aus der Steuerkulisse 1362 ausgetreten ist, übernimmt dessen obere Fläche 1424 im Zusammenspiel mit der unteren Fläche des oberen zweiten Führungselements 144 die weitere Schwenkbewegung des Deckels 130.

Die im zweiten Ausführungsbeispiel gezeigte Mechanik ist besonders einfach aufgebaut, da Stegführung 1361 und Steuerkulisse 1362 einteilig ausgeführt werden können und dadurch keine Übergabe zur Überbrückung einer Lücke zwischen diesen beiden ersten Führungselementen nötig ist. Auch der Antriebsschlitten 140 ist einfacher aufgebaut als beim ersten Ausführungsbeispiel, da an ihm nur zwei zweite Führungselemente 142 und 144 vorgesehen sind, von denen das untere zweite Führungselement 142 eine Doppelfunktion hat: Zum einen das Umgreifen der Stegführung 1361 im Zusammenwirken mit dem oberen zweiten Führungselement 144 für die Schwenkbewegungen des Deckels 130 und zum anderen den Eingriff in die Steuerkulisse 1362 für die Verschiebung des Deckels 130.

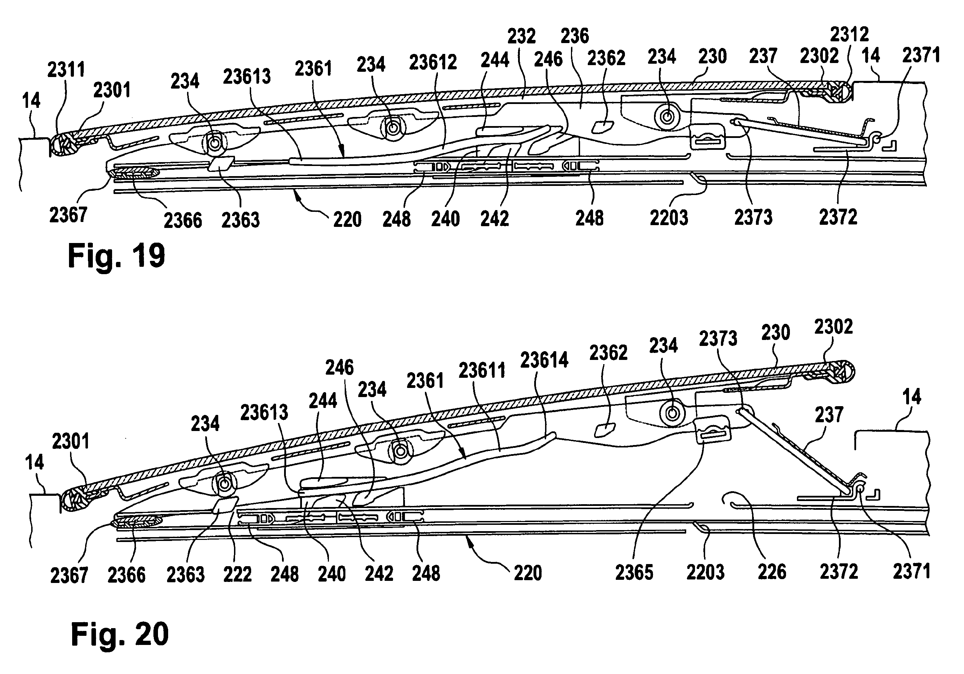

Das dritte Ausführungsbeispiel, das in den Fign. 19 bis 26 dargestellt ist, unterscheidet sich vorn ersten Ausführungsbeispiel gemäß den Fign. 1 bis 9 und vorn zweiten Ausführungsbeispiel gemäß den Fign. 10 bis 18 dadurch, dass die am Deckelträger 236 angeordneten ersten Führungselemente als Stegführung 2361 und als Steuernocke 2362 ausgebildet sind, während die zweiten Führungselemente, die am Antriebsschlitten 240 vorgesehen sind, in diesem Fall von einem unteren zweiten Führungselements 242, einem oberen zweiten Führungselement 244 und einer Steuerkulisse 246 gebildet wird. Das untere zweite Führungselement 242 und das obere zweite Führungselement 244 dienen dabei zum Umgreifen der Stegführung 2361, während die Steuerkulisse 246 zum Eingriff der Steuernocke 2362 während der Verschiebebewegung des Deckels 230 dient.

Wie beim zweiten Ausführungsbeispiel werden die Verriegelungselemente zur Sicherung des Deckels 230 gegen eine Längsverschiebung nur von einem vorderen Steuersteg 2363 und von einem hinterer Steuersteg 2365 gebildet, die mit einer vorderen Aussparung 222 beziehungsweise einer hinteren Aussparung 226 der Führungsschiene 220 zusammenwirken.

Den übrigen Bauteilen, die denen des ersten oder zweiten Ausführungsbeispiels gleich oder ähnlich sind, wurde beim dritten Ausführungsbeispiel eine "2" vorangestellt.

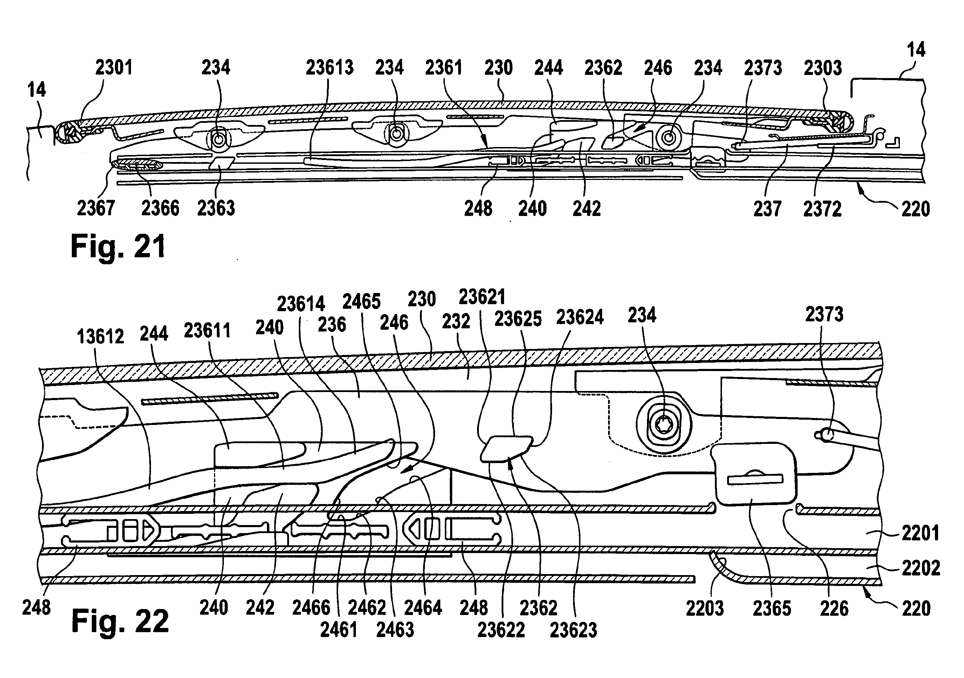

Beim dritten Ausführungsbeispiel erfolgt ähnlich wie beim ersten Ausführungsbeispiel beim Übergang von der Absenkbewegung der Hinterkante 2302 des Deckels 230 zur Verschiebebewegung des Deckels 230 eine Übergabe von einer Führung des Deckels 230 durch das untere zweite Führungselement 242 und das obere zweite Führungselement 244 im Zusammenwirken mit der Stegführung 2361 zu einer Führung des Deckels 230 durch die Steuernocke 2362 im Zusammenwirken mit der Steuerkulisse 246. Dieser Übergang ist in den Fign. 22 bis 26 vergrößert dargestellt. Ausgehend von der in Figur 22 dargestellten Schließposition des Deckels 230, bei der das untere zweite Führungselement 242 und das obere zweite Führungselement die Stegführung 2361 in deren erstem Führungsabschnitt 23611 umgreifen, fährt der Antriebsschlitten 240 für die Absenkbewegung der Hinterkante 2302 des Deckels 230 nach hinten, d.h. in den Figuren nach rechts.

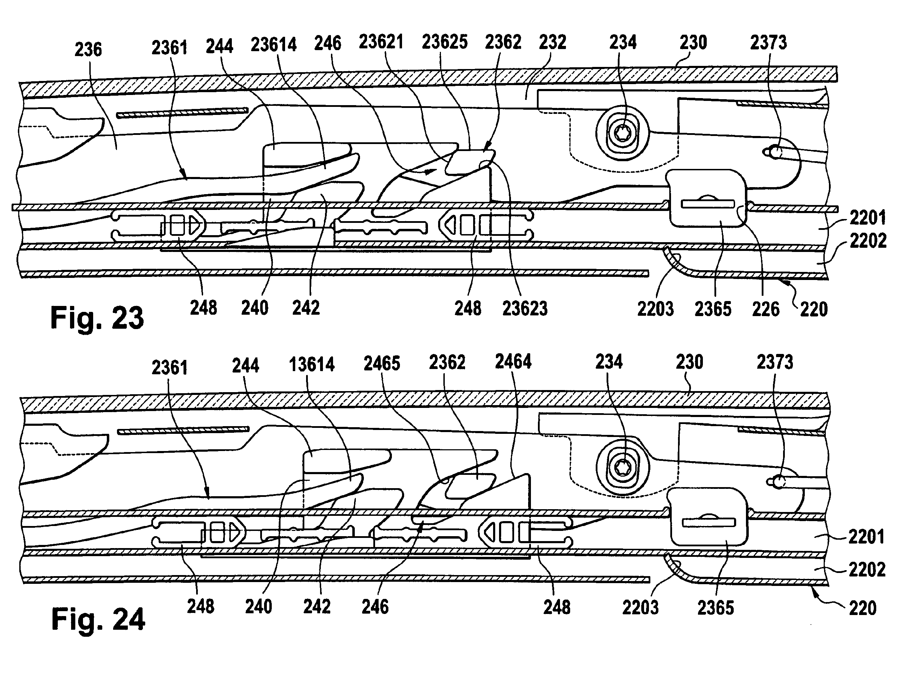

Sobald das untere zweite Führungselement 242 und das obere zweite Führungselement 244 gemäß Figur 23 den vierten Abschnitt 23614 der Stegführung 2361 erreicht haben, tritt die Führungsnocke 2362 in einen nach hinten und oben geöffneten, schräg nach vorne unten verlaufenden Führungskanal der Steuerkulisse 246 ein. Diese Führungskanal wird begrenzt von einer unteren schräg nach hinten ansteigenden Führungsfläche 2464 und einer parallel zu dieser beabstandet angeordneten schräg nach hinten ansteigenden oberen Führungsfläche 2465.

Die Führungsnocke 2362 weist eine schräg nach vorn abfallende erste Führungsfläche 23621, eine in etwa horizontal angeordnete zweite Führungsfläche 23622 an ihrer Unterseite, eine schräg nach hinten ansteigende dritte Führungsfläche 23623, eine an diese nach hinten anschließende stärker schräg nach hinten ansteigende vierte Führungsfläche 23624 und eine in etwa horizontale obere Führungsfläche 23625 auf. Die erste Führungsfläche 23621 und die vierte Führungsfläche 23624 sind in etwa parallel zueinander angeordnet. Die zweite untere Führungsfläche 23622 und die obere Führungsfläche 23625 der Führungsnocke 2362 sind ebenfalls in etwa parallel zueinander angeordnet.

Beim Eintreten der Führungsnocke 2362 in die Steuerkulisse 246 gemäß Figur 23 liegt die dritte Führungsfläche 23623 an der unteren Führungsfläche 2464 der Steuerkulisse 246 und die zwischen der ersten Führungsfläche 23621 und der oberen Führungsfläche 23625 der Führungsnocke 2362 liegende gerundete Kante liegt an der oberen Führungsfläche 2465 der Steuerkulisse 246 an.

Beim weiteren Verfahren des Antriebsschlittens 240 nach hinten gemäß den Fign. 24 bis 26 wird die Führungsnocke 2362 durch den schräg nach unten verlaufenden Führungskanal der Steuerkulisse 246 weiter nach unten bewegt, wodurch gleichzeitig eine weitere Absenkbewegung der Hinterkante 2302 des Deckels 230 erfolgt. Gleichzeitig werden auch die Verriegelungselemente, von denen in den Fign. 22 bis 26 nur der hintere Steuersteg 2365 gezeigt ist, durch die Aussparungen 222 bzw. 226 der Führungsschiene 220 immer weiter nach unten bewegt.

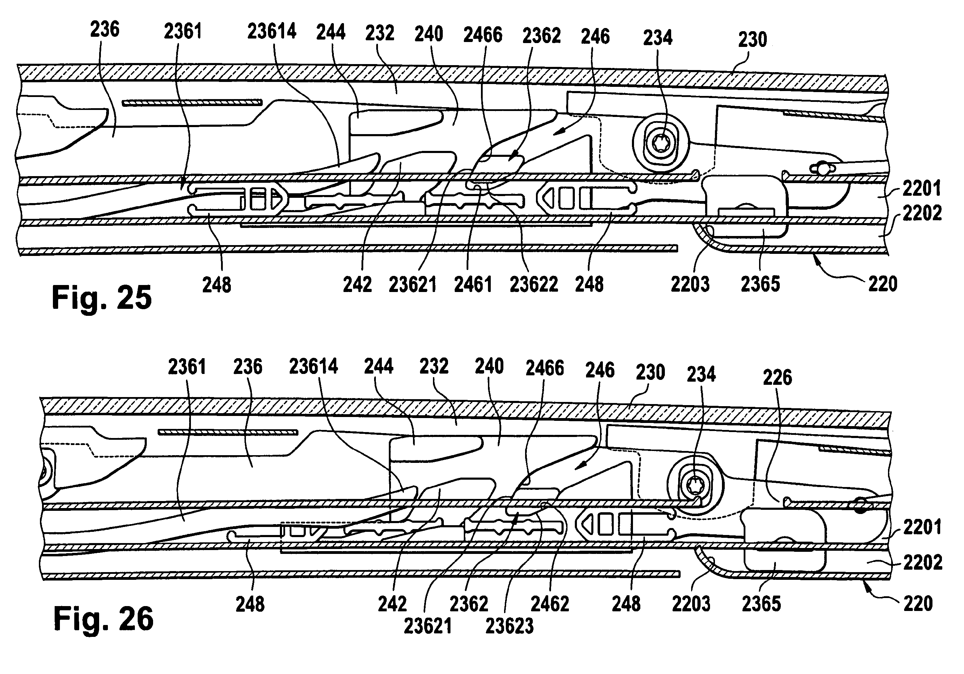

Gleichzeitig mit dem Eintreten der Führungsnocke 2362 in den unteren, stärker geneigten Führungskanal der Steuerkulisse 246, der von einem vorderen Abschnitt 2466, einem unteren Abschnitt 2461 und einem hinteren Abschnitt 2463 begrenzt wird, beenden das untere zweite Führungselement 242 und das obere zweite Führungselement 244 ihren Eingriff mit dem Steuersteg 2361. Das untere zweite Führungselement 242 liegt bei vollständigem Eingriff der Führungsnocke 2362 in die Steuerkulisse 246 (Figur 26) mit einer vorderen schräg nach hinten ansteigenden Fläche knapp hinter dem hinteren Ende des vierten Abschnitts 23614 des Steuerstegs 2261. Die Position gemäß Figur 25 markiert den Beginn der Verschiebung des Deckels 230 nach hinten unter das feste Fahrzeugdach 14. In Figur 26 ist der Deckel 230 bereits um einen kleinen Betrag nach hinten verschoben, wie leicht an der Position des Steuersteges 2365 in Bezug auf die hintere Kante der Aussparung 226 in der Führungsschiene 220 zu erkennen ist.

Beim Schließen erfolgt der Bewegungsablauf in umgekehrter Reihenfolge. Sobald der Antriebsschlitten 240 beim Verfahren nach vorn die in Figur 25 dargestellte Position erreicht hat, fährt der hintere Steuersteg 2365 gegen den Anschlag 2203, der an der unteren Führungsfläche der unteren Führungsbahn 2202 der Führungsschiene 220 ausgebildet ist. Dadurch wird der Steuersteg 2365 zwangsweise nach oben in die Aussparung 226 bewegt. Der Deckel 230 kann dadurch bei einer weiteren Bewegung des Antriebsschlittens 240 nach vorn nicht mehr weiter mit nach vorne genommen werden. Der Eingriff der Steuernocke 2362 in die Steuerkulisse 246 und kurz darauf auch das Abgleiten der schrägen vorderen Führungsfläche am unteren zweiten Führungselement 242 an der rückwärtigen, schräg nach unten geneigten Führungsfläche des Steuerstegs 2361 bewirken das Anheben der Deckelhinterkante 2302 in Richtung auf die Schließposition gemäß Figur 19 und bei weiterem Verfahren des Antriebsschlittens 240 nach vorn das weitere Anheben in die Lüftungsposition gemäß Figur 20.

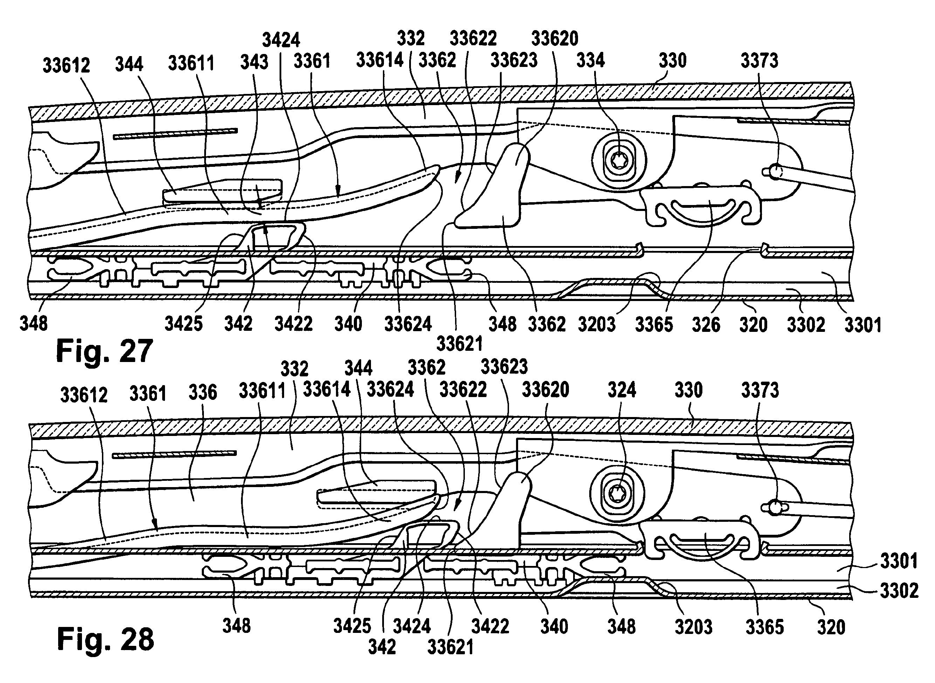

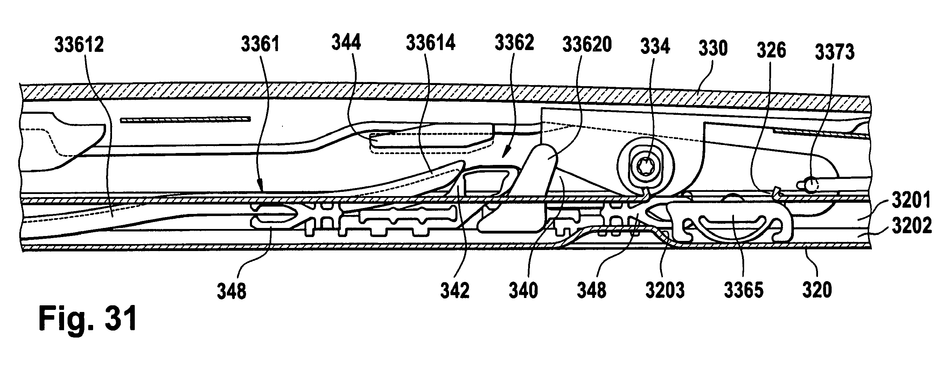

Beim vierten Ausführungsbeispiel gemäß den Fign. 27 bis 31 sind ähnlich wie beim zweiten Ausführungsbeispiel gemäß den Fign. 10 bis 18 am Antriebsschlitten 340 nur zwei zweite Führungselemente 342 bzw. 344 vorhanden, die den Führungssteg 3361 umgreifen. Die Steuerkulisse 3362 wird von einem Führungskanal gebildet, der sich zwischen dem hinteren Ende des Steuerstegs 3361 und einer Steuernocke 33620 befindet, die beabstandet zum Steuersteg 3361 hinter diesem angeordnet ist.

Der Steuersteg 3361 weist anschließend an den vierten Führungsabschnitt 33614 an seinem hinteren Ende eine schräg nach vorn unten abfallende Führungsfläche 33624 auf, die den vorderen Teil der Steuerkulisse 3362 bildet. Der hintere Teil der Steuerkulisse 3362 wird von einem Nasenförmigen unteren ersten Abschnitt 33621 , einem an diesen anschließenden schräg nach hinten ansteigenden zweiten Führungsabschnitt 33622 und einem an diesen nach oben anschließenden, stärker schräg nach hinten ansteigenden dritten Führungsabschnitt 33623 der Steuernocke 33620 gebildet.

Das untere zweite Führungselement 342 weist an seiner Vorderseite eine schräg nach hinten ansteigende Fläche 3425, an seiner Oberseite eine in etwa horizontale Führungsfläche 3424 und an seinem hinteren Ende eine schräg nach vorn abfallende Führungsfläche 3422 auf.

Das untere zweite Führungselement 342 übt beim vierten Ausführungsbeispiel eine Doppelfunktion aus. Es umgreift zum einen im Zusammenwirken mit dem oberen zweiten Führungselement 344 mit seiner oberen Führungsfläche 3424 die Stegführung 3361 in der Schließposition des Deckels 330 und während der Schwenkbewegungen desselben. Zum anderen greift das untere zweite Führungselement 342 beim Verschieben des Deckels 330 in die Führungskulisse 3362 ein.

Aus den Fign. 27 bis 31 wird deutlich, dass das untere zweite Führungselement 342 dabei kontinuierlich im Eingriff mit dem Steuersteg 3361 beziehungsweise der Führungskulisse 3362 ist, so dass in diesem Ausführungsbeispiel - ähnlich wie beim zweiten Ausführungsbeispiel - keine Übergabe an andere Führungselemente stattfinden muss.

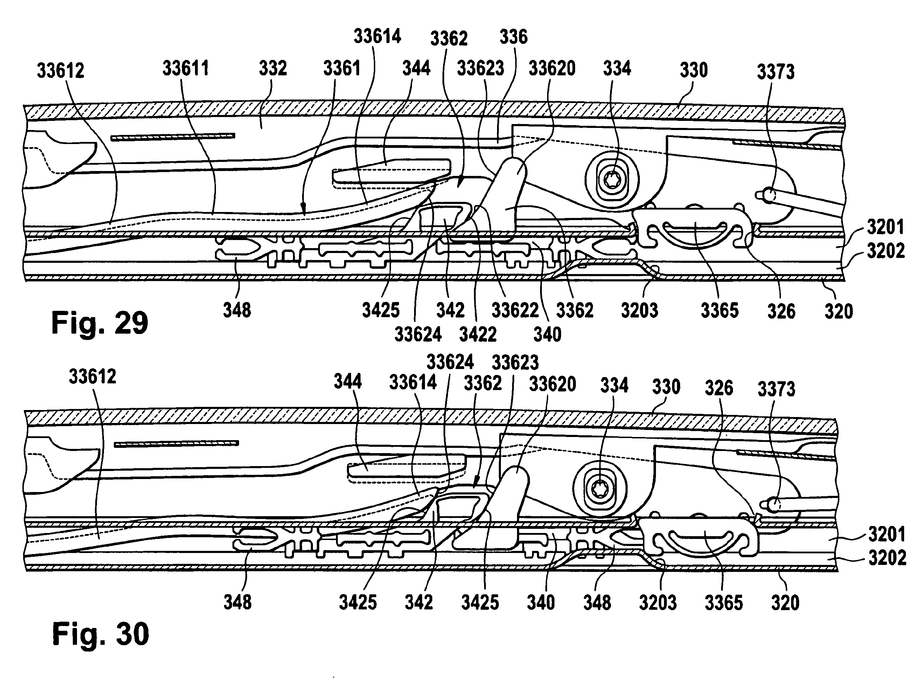

Wie aus Figur 28 und 29 ersichtlich, wird der vierte Abschnitt 33614 des Steuerstegs 3361 solange zwischen dem unteren zweiten Führungselement 342 und dem oberen zweiten Führungselement 344 geführt, bis das untere zweite Führungselement 342 soweit in den Führungskanal der Steuerkulisse 3362 eingetreten ist, dass es mit seiner hinteren Führungsfläche 3422 an der Führungsfläche 33623 der Steuernocke 33620 und mit seiner vorderen Führungsfläche 3425 an der vorderen Führungsfläche 33624 der Steuerkulisse 3362 anliegt.

Nach dem vollständigen Absenken der Hinterkante des Deckels 330 steht das obere zweite Führungselement 344 in einem Abstand oberhalb des hinteren Endes des Steuerstegs 3361, während das untere zweite Führungselement 342 so weit in die Führungskulisse 3362 eingetreten ist, dass seine obere Führungsfläche 3424 annähernd eine Verlängerung des vierten Abschnitts 33614 des Steuerstegs 3361 nach hinten bildet. Das hintere Ende des Deckels 330 ist dabei soweit abgesenkt, dass der hintere Steuersteg 3365 vollständig nach unten durch die hintere Aussparung 326 der Führungsschiene 320 durchgetreten ist und nachfolgend bei der Verschiebung des Deckels 330 nach hinten in der unteren Führungsbahn 3202 der Führungsschiene 320 geführt wird.

Der Übergang von einer Verschiebung des Deckels 330 in eine Schwenkbewegung des Deckels 330 wird bei einer Bewegung in der Gegenrichtung zum Schließen des Deckels 330 wieder vorn Anschlag 3203 an der unteren Führungsbahn 3202 der Führungsschiene 320 im Zusammenwirken mit dem hinteren Steuersteg 3365 gesteuert. Durch den Anschlag 3203 wird der Steuersteg 3365 nach oben in die Aussparung 326 der Führungsschiene 320 gedrückt. Da der Deckel 330 nun nicht mehr weiter nach vorne verschoben werden kann, wird er bei einem weiteren Verschieben des Antriebsschlittens 340 nach vorn - durch das Abgleiten des unteren Führungselements 342 in der Steuerkulisse 3362 nach vorn unten - nach oben geschwenkt. Sobald die obere Führungsfläche 3424 des unteren zweiten Führungselements 342 den Steuersteg 3361 wieder von dessen Unterseite umgreift, ist auch die untere Führungsfläche des oberen zweiten Führungselements 344 wieder in Anlage an der oberen Führungsfläche des Steuerstegs 3361.

Die übrigen Bezugszahlen des vierten Ausführungsbeispiels, die in der vorstehenden Figurenbeschreibung nicht einzelnen erwähnt wurden, entsprechen denen der ersten drei Ausführungsbeispiele, wobei die führende Ziffer von einer "3" gebildet wird. Die Figuren für das vierte Ausführungsbeispiel enthalten zwar keine Gesamtansicht. Für den Fachmann ist jedoch klar, dass die nicht gezeigten vorderen Teile der Mechanik denen der anderen Ausführungsbeispiele entsprechen.

Es versteht sich für den Fachmann, dass die vorstehend nur für eine Dachseite und im Singular beschriebenen Mechaniken bevorzugt symmetrisch zu einer Mittellängsebene auf beiden Seiten der Dachöffnung 18 oder einer anderen Fahrzeugöffnung vorgesehen ist.

Durch die Erfindung ist mittels der nacheinander in unterschiedlichen Bewegungsphasen des Deckels wirksamen Kombination einer an sich bekannten Stegführung und einer an sich bekannten Kulissenführung eine besonders einfache, leicht und kostengünstig herzustellende, aus wenigen Teilen bestehende Mechanik eines Karosseriebauteils, insbesondere eines Schiebehebedachs geschaffen worden, bei der auf jeglichen zusätzlichen Ausstellhebel oder Verriegelungshebel vollständig verzichtet werden kann.

Alle Bewegungsabläufe werden unmittelbar und ausschließlich durch die Verschiebung des Antriebsschlittens in der Führungsschiene bewirkt, so dass die erfindungsgemäße Mechanik eine besonders einfache, kostengünstige, robuste, weitestgehend spielfreie, verschleiß- und geräuscharme Bewegung eines Karosseriebauteils und insbesondere eines Deckels eines Schiebehebedachs ermöglicht.

### Bezugszeichenliste

Für alle Ausführungsbeispiele:
- 10: Fahrzeug
- 12: Fahrzeugdach
- 14: fester Dachbereich
- 16: Dachrahmen
- 18: Dachöffnung
erstes Ausführungsbeispiel (Fign. 1 - 9):
- 20: Führungsschiene
- 201: obere Führungsbahn (von 20)
- 202: untere Führungsbahn (von 20)
- 22: vordere Aussparung (in 20)
- 24: zweite Aussparung (in 20)
- 26: hintere Aussparung (in 20)
- 28: Anschlag
- 30: Karosseriebauteil (Deckel)
- 301: Vorderkante (von 30)
- 302: Hinterkante (von 30)
- 311: Dichtung (vorn)
- 312: Dichtung (hinten)
- 32: Deckelinnenblech
- 34: Befestigungspunkt
- 36: Träger (Deckelträger)
- 361: Stegführung (erstes Führungselement)
- 3611: (erster) Abschnitt (von 361)
- 3612: (zweiter) Abschnitt (von 361)
- 3613: (dritter) Abschnitt (von 361)
- 3614: (vierter) Abschnitt (von 361)
- 362: Steuerkulisse (erstes Führungselement)
- 3621: (erster) Abschnitt (von 362)
- 3622: (zweiter) Abschnitt (von 362)
- 3623: (dritter) Abschnitt (von 362)
- 3624: (vierter) Abschnitt (von 362)
- 3625: (fünfter) Abschnitt (von 362)
- 3626: (sechster) Abschnitt (von 362)
- 3627: Aufnahme (an 362)
- 363: (vorderer) Steuersteg (Verriegelungselement)
- 364: (zweiter) Steuersteg (Verriegelungselement)
- 365: (hinterer) Steuersteg (Verriegelungselement)
- 366: Schwenkachse
- 367: (vorderes) Gleitelement
- 368: Lücke (zwischen 361 und 362)
- 40: Schlitten (Antriebsschlitten)
- 42: (unteres) zweites Führungselement
- 43: Führungsspalt (zwischen 42 und 44)
- 44: (oberes) zweites Führungselement
- 46: (hinteres) zweites Führungselement
- 461: (untere) Fläche (an 46)
- 462: (ansteigende) Fläche (an 46)
- 463: (stärker ansteigende) Fläche (an 46)
- 464: (obere) Fläche (an 46)
- 465: (vordere schräge) Fläche (an 46)
- 48: Gleitelement (von 40)
- 50: Dämpfungselement (an 40)
zweites Ausführungsbeispiel (Fign. 10 - 18):
- 120: Führungsschiene
- 1201: obere Führungsbahn (von 120)
- 1202: untere Führungsbahn (von 120)
- 122: vordere Aussparung (in 120)
- 126: hintere Aussparung (in 120)
- 128: Anschlag
- 130: Karosseriebauteil (Deckel)
- 1301: Vorderkante (von 130)
- 1302: Hinterkante (von 130)
- 1311: Dichtung (vorn)
- 1312: Dichtung (hinten)
- 132: Deckelinnenblech
- 134: Befestigungspunkt
- 136: Träger (Deckelträger)
- 1361: Stegführung (erstes Führungselement)
- 13611: (erster) Abschnitt (von 1361)
- 13612: (zweiter) Abschnitt (von 1361) 13613(dritter) Abschnitt (von 1361)
- 13614: (vierter) Abschnitt (von 1361) 13615 Anschlag (an 1361)
- 1362: Steuerkulisse (erstes Führungselement)
- 13621: (erster) Abschnitt (von 1362)
- 13622: (zweiter) Abschnitt (von 1362)
- 13623: (dritter) Abschnitt (von 1362)
- 13624: (untere) Fläche (von 1362)
- 13627: Aufnahme (an 1362)
- 1363: (vorderer) Steuersteg (Verriegelungselement)
- 1365: (hinterer) Steuersteg (Verriegelungselement)
- 1366: Schwenkachse
- 1367: (vorderes) Gleitelement
- 1368: Übergangsbereich (zwischen 1361 und 1362)
- 137: Wasserrinne
- 1371: Schwenklager
- 1372: Schlitten
- 1373: Anlenkung
- 140: Schlitten (Antriebsschlitten)
- 142: (unteres) zweites Führungselement
- 1422: (ansteigende) Fläche (an 142)
- 1424: (obere) Fläche (an 142)
- 1425: (vordere schräge) Fläche (an 142)
- 143: Führungsspalt (zwischen 142 und 144)
- 144: (oberes) zweites Führungselement
- 148: Gleitelement (von 140)
- 150: Dämpfungselement (an 140)
drittes Ausführungsbeispiel (Fign. 19 - 26):
- 220: Führungsschiene
- 2201: obere Führungsbahn (von 220)
- 2202: untere Führungsbahn (von 220)
- 2203: Anschlag
- 222: vordere Aussparung (in 220)
- 226: hintere Aussparung (in 220)
- 228: Anschlag
- 230: Karosseriebauteil (Deckel)
- 2301: Vorderkante (von 230)
- 2302: Hinterkante (von 230)
- 2311: Dichtung (vorn)
- 2312: Dichtung (hinten)
- 232: Deckelinnenblech
- 234: Befestigungspunkt
- 236: Träger (Deckelträger)
- 2361: Stegführung (erstes Führungselement)
- 23611: (erster) Abschnitt (von 2361)
- 23612: (zweiter) Abschnitt (von 2361)
- 23613: (dritter) Abschnitt (von 2361)
- 23614: (vierter) Abschnitt (von 361)
- 2362: Steuernocke (erstes Führungselement)
- 23621: (erster) Abschnitt (von 2362)
- 23622: (zweiter) Abschnitt (von 2362)
- 23623: (dritter) Abschnitt (von 2362)
- 23624: (vierter) Abschnitt (von 2362)
- 23625: (fünfter) Abschnitt (von 2362)
- 23626: (sechster) Abschnitt (von 2362)
- 23627: Aufnahme (an 2362)
- 2363: (vorderer) Steuersteg (Verriegelungselement)
- 2365: (hinterer) Steuersteg (Verriegelungselement)
- 2366: Schwenkachse
- 2367: (vorderes) Gleitelement
- 237: Wasserrinne
- 2371: Schwenklager
- 2372: Schlitten
- 2373: Anlenkung
- 240: Schlitten (Antriebsschlitten)
- 242: (unteres) zweites Führungselement
- 243: Führungsspalt (zwischen 242 und 244)
- 244: (oberes) zweites Führungselement
- 246: (hinteres) zweites Führungselement (Steuerkulisse)
- 2461: (untere) Fläche (an 246)
- 2462: (ansteigende hintere) Fläche (an 246)
- 2463: (stärker ansteigende hintere) Fläche (an 246)
- 2464: (flacher ansteigende hintere) Fläche (an 246)
- 2465: (schräge vordere) Fläche (an 246)
- 2466: (steilere schräge vordere) Fläche (an 246)
- 248: Gleitelement (von 240)
viertes Ausführungsbeispiel (Fign. 27 - 31):
- 320: Führungsschiene
- 3201: obere Führungsbahn (von 320)
- 3202: untere Führungsbahn (von 320)
- 3203: Anschlag
- 326: hintere Aussparung (in 320)
- 328: Anschlag
- 330: Karosseriebauteil (Deckel)
- 332: Deckelinnenblech
- 334: Befestigungspunkt
- 336: Träger (Deckelträger)
- 3361: Stegführung (erstes Führungselement)
- 33611: (erster) Abschnitt (von 3361)
- 33612: (zweiter) Abschnitt (von 3361)
- 33614: (vierter) Abschnitt (von 3361)
- 3362: Steuerkulisse (erstes Führungselement)
- 33620: Steuernocke
- 33621: (erster) Abschnitt (von 3362)
- 33622: (zweiter) Abschnitt (von 3362)
- 33623: (dritter) Abschnitt (von 3362)
- 33624: (vierter) Abschnitt (an 3362)
- 3365: (hinterer) Steuersteg (Verriegelungselement)
- 3373: Anlenkung (der Wasserrinne)
- 340: Schlitten (Antriebsschlitten)
- 342: (unteres) zweites Führungselement
- 3422: (hintere schräge) Fläche (an 342)
- 3424: (obere) Fläche (an 342)
- 3425: (vordere schräge) Fläche (an 342)
- 343: Führungsspalt (zwischen 342 und 344)
- 344: (oberes) zweites Führungselement
- 348: Gleitelement (von 340)

## Patentansprüche

1. Mechanik zum Erzeugen von Schwenkbewegungen und Verschiebebewegungen eines Karosseriebauteils (30; 130; 230; 330), mit einem verschiebbaren Schlitten (40, 140, 240, 340), der mittels wenigstens eines zweiten Führungselements (42, 44, 46; 142, 144; 242, 244, 246; 342, 344) mit wenigstens einem am Karosseriebauteil angeordneten ersten Führungselement (361; 1361; 2361; 3361) im Eingriff steht, wobei der verschiebbare Schlitten (40, 140, 240, 340) mit wenigstens zwei zweiten Führungselementen (42, 44, 46; 142, 144; 242, 244, 246; 342, 344) versehen ist, die in der Schließposition und während der Schwenkbewegungen des Karosseriebauteils (30; 130; 230; 330) mit dem ersten Führungselement (361; 1361; 2361; 3361) und die bei einer Verschiebebewegung des Karosseriebauteils (30; 130; 230; 330) mit einem weiteren, dem Karosseriebauteil (30; 130; 230; 330) zugeordneten ersten Führungselement (362; 1362; 2362; 3362) zusammenwirken, **dadurch gekennzeichnet,**
**dass** zumindest ein Teil der zweiten Führungselemente (42, 44; 144; 242, 244; 344) mit dem als Stegführung (361; 1361; 2361; 3361) ausgebildeten ersten Führungselement außer Eingriff gerät, sobald zumindest eines der zweiten Führungselemente (46; 142; 342) mit dem als Steuerkulisse (362; 1362; 3362) ausgebildeten weiteren ersten Führungselement im Eingriff steht.

2. Mechanik gemäß Anspruch 1,
**dadurch gekennzeichnet, dass** das weitere erste Führungselement als Steuerkulisse (362; 1362; 3362) oder als Steuernocke (2362) ausgebildet ist

3. Mechanik nach einem der vorhergehenden Ansprüche,
**dadurch gekennzeichnet, dass** wenigstens ein die Verschiebebewegung des Karosseriebauteils (30; 130; 230; 330) in dessen Schließposition und während dessen Schwenkbewegungen blockierendes Verriegelungselement (363, 364, 365; 1363, 1365; 2363, 2365; 3363, 3365) am Karosseriebauteil (30; 130; 230; 330) oder an einem dem Karosseriebauteil (30; 130; 230; 330) zugeordneten Bauteil (36; 136; 236; 336) angeordnet ist.

4. Mechanik nach Anspruch 3,
**dadurch gekennzeichnet, dass** der Schlitten (40, 140, 240, 340) längs einer Führungsschiene (20, 120, 220) verschiebbar ist, die wenigstens eine Aussparung (22, 24, 26; 122, 126; 222, 226; 322, 326) für den Eingriff oder den Durchtritt des Verriegelungselements (363, 364, 365; 1363, 1365; 2363, 2365; 3363, 3365) aufweist.

5. Mechanik nach wenigstens einem der vorhergehenden Ansprüche,
**dadurch gekennzeichnet, dass** die ersten Führungselemente (361, 362; 1361, 1362; 2361, 2362) und/oder das Verriegelungselement (363, 364, 365; 1363, 1365; 2363, 2365; 3363, 3365) am Karosseriebauteil (30; 130; 230; 330) oder an einem am Karosseriebauteil (30; 130; 230; 330) angeordneten Bauteil (36; 136; 236; 336) zumindest teilweise einstückig ausgebildet sind.

6. Mechanik nach wenigstens einem der vorhergehenden Ansprüche,
**dadurch gekennzeichnet, dass** die zweiten Führungselemente (42, 44, 46; 142, 144; 242, 244, 246; 342, 344) zumindest teilweise einstückig mit dem Schlitten (40; 140; 240; 340) ausgebildet sind.

7. Mechanik nach wenigstens einem der vorhergehenden Ansprüche,
**dadurch gekennzeichnet, dass** zwischen dem als Stegführung (361; 1361; 2361; 3361) ausgebildeten ersten Führungselement und dem als Steuerkulisse (362; 1362; 3362) oder als Steuernocke (2362; 33620) ausgebildeten weiteren ersten Führungselement in Längsrichtung eine Lücke (368; 2368; 3362) oder ein gegenüber der sonstigen Dicke der Stegführung (361; 1361; 2361; 3361) verdünnter Übergangsbereich (1368) vorgesehen ist.

8. Mechanik nach wenigstens einem der vorhergehenden Ansprüche, soweit von Anspruch 3 abhängig,
**dadurch gekennzeichnet, dass** das Verriegelungselement von mehreren in Längsrichtung voneinander beabstandeten Steuerstegen (363, 364, 365; 1363, 1365; 2363, 2365; 3363, 3365) gebildet wird, die jeweils mit einer Aussparung (22, 24, 26; 122, 126; 222, 226; 322, 326) an der Führungsschiene (20; 120; 220; 320) zusammenwirken.

9. Mechanik nach wenigstens einem der vorhergehenden Ansprüche,
**dadurch gekennzeichnet, dass** ein hinterer Steuersteg (365; 1365; 2365; 3365) hinter den ersten Führungselementen (361, 362; 1361, 1362; 2361, 2362; 3361, 3362) angeordnet ist.

10. Mechanik nach wenigstens einem der vorhergehenden Ansprüche,
**dadurch gekennzeichnet, dass** wenigstens ein vorderer Steuersteg (363, 364; 1363; 2363; 3363) vor den ersten Führungselementen (361, 362; 1361, 1362; 2361, 2362; 3361, 3362) angeordnet ist.

11. Mechanik nach einem der Ansprüche 8 bis 10,
**dadurch gekennzeichnet, dass** die Steuerstege (363, 364, 365; 1363, 1365; 2363, 2365; 3363, 3365) beim Verschieben des Karosseriebauteils (30; 130; 230; 330) in einer ersten Führungsbahn (201; 1202; 2202; 3202) der Führungsschiene (20; 120; 220; 320) geführt sind, während Gleitelemente (48; 148; 248; 348) am Schlitten (40; 140; 240; 340) in einer anderen Führungsbahn (202; 1201; 2201; 3201) der Führungsschiene (20; 120; 220) geführt sind.

12. Mechanik nach einem der vorhergehenden Ansprüche,
**dadurch gekennzeichnet, dass** an einer dem Karosseriebauteil (30; 130; 230; 330) zugewandten Fläche des Schlittens (40; 140; 240; 340) ein Dämpfungselement (50; 150) angeordnet ist.

13. Mechanik nach einem der vorhergehenden Ansprüche,
**dadurch gekennzeichnet, dass** die ersten Führungselemente (1361, 1362) von einer Stegführung (1361) und einer unmittelbar an deren hinterem Ende anschließenden Steuerkulisse (1362) gebildet werden.

14. Mechanik nach Anspruch 13,
**dadurch gekennzeichnet, dass** eines der zweiten Führungselemente (142; 342) ohne Unterbrechung immer mit der Stegführung (1361; 3361) oder mit der Steuerkulisse (1362; 3362) im Eingriff steht.

15. Verwendung einer Mechanik nach wenigstens einem der vorhergehenden Ansprüche für ein Schiebehebedach eines Fahrzeugs.

## Claims

1. Mechanism for producing pivoting movements and displacement movements of a body component (30; 130; 230; 330), with a displaceable slide (40, 140, 240, 340) which is in engagement with at least one first guide element (361; 1361; 2361; 3361) arranged on the body component by means of at least one second guide element (42, 44, 46; 142, 144; 242, 244, 246; 342, 344), wherein the displaceable slide (40, 140, 240, 340) is provided with at least two second guide elements (42, 44, 46; 142, 144; 242, 244, 246; 342, 344) which interact with the first guide element (361; 1361; 2361; 3361) in the closed position and during the pivoting movements of the body component (30; 130; 230; 330), and which interact with a further first guide element (362; 1362; 2362; 3362) assigned to the body component (30; 130; 230; 330) upon a displacement movement of the body component (30; 130; 230; 330), **characterized in that** at least some of the second guide elements (42, 44; 144; 242, 244; 344) become disengaged from the first guide element designed as a web guide (361; 1361; 2361; 3361) as soon as at least one of the second guide elements (46; 142; 342) is in engagement with the further first guide element designed as a control slot (362; 1362; 3362).

2. Mechanism according to Claim 1, **characterized in that** the further first guide element is designed as a control slot (362; 1362; 3362) or as a control cam (2362).

3. Mechanism according to one of the preceding claims, **characterized in that** at least one locking element (363, 364, 365; 1363, 1365; 2363, 2365; 3363, 3365) blocking the displacement movement of the body component (30; 130; 230; 330) in the closed position thereof and during the pivoting movements thereof is arranged on the body component (30; 130; 230; 330) or on a component (36; 136; 236; 336) assigned to the body component (30; 130; 230; 330).

4. Mechanism according to Claim 3, **characterized in that** the slide (40, 140, 240, 340) is displaceable along a guide rail (20, 120, 220) which has at least one recess (22, 24, 26; 122, 126; 222, 226; 322, 326) for the engagement or the passage of the locking element (363, 364, 365; 1363, 1365; 2363, 2365; 3363, 3365).

5. Mechanism according to at least one of the preceding claims, **characterized in that** the first guide elements (361, 362; 1361, 1362; 2361, 2362) and/or the locking element (363, 364, 365; 1363, 1365; 2363, 2365; 3363, 3365) are at least partially formed integrally on the body component (30; 130; 230; 330) or on a component (36; 136; 236; 336) arranged on the body component (30; 130; 230; 330).

6. Mechanism according to at least one of the preceding claims, **characterized in that** the second guide elements (42, 44, 46; 142, 144; 242, 244; 246; 342, 344) are at least partially formed integrally with the slide (40; 140; 240; 340).

7. Mechanism according to at least one of the preceding claims, **characterized in that** a gap (368; 2368; 3362) or a transition region (1368) which is thinner than the rest of the thickness of the web guide (361; 1361; 2361; 3361) is provided in the longitudinal direction between the first guide element designed as a web guide (361; 1361; 2361; 3361) and the further first guide element designed as a control slot (362; 1362; 3362) or as a control cam (2362; 33620).

8. Mechanism according to at least one of the preceding claims, insofar as dependent on Claim 3, **characterized in that** the locking element is formed by a plurality of control webs (363, 364, 365; 1363, 1365; 2363, 2365; 3363, 3365) which are spaced apart from one another in the longitudinal direction and respectively interact with a recess (22, 24, 26; 122, 126; 222, 226; 322, 326) on the guide rail (20; 120; 220; 320).

9. Mechanism according to at least one of the preceding claims, **characterized in that** a rear control web (365; 1365; 2365; 3365) is arranged behind the first guide elements (361, 362; 1361, 1362; 2361, 2362; 3361, 3362).

10. Mechanism according to at least one of the preceding claims, **characterized in that** at least one front control web (363, 364; 1363; 2363; 3363) is arranged in front of the first guide elements (361, 362; 1361, 1362; 2361, 2362; 3361, 3362).

11. Mechanism according to one of Claims 8 to 10, **characterized in that**, upon displacement of the body component (30; 130; 230; 330), the control webs (363, 364, 365; 1363, 1365; 2363, 2365; 3363, 3365) are guided in a first guide track (201; 1202; 2202; 3202) of the guide rail (20; 120; 220; 320) while sliding elements (48; 148; 248, 348) are guided on the slide (40; 140; 240; 340) in another guide track (202; 1201; 2201; 3201) of the guide rail (20; 120; 220).

12. Mechanism according to one of the preceding claims, **characterized in that** a damping element (50; 150) is arranged on a surface of the slide (40; 140; 240; 340), said surface facing the body component (30; 130; 230; 330).

13. Mechanism according to one of the preceding claims, **characterized in that** the first guide elements (1361, 1362) are formed by a web guide (1361) and a control slot (1362) directly adjoining the rear end thereof.

14. Mechanism according to Claim 13, **characterized in that** one of the second guide elements (142; 342) is always continuously in engagement with the web guide (1361; 3361) or with the control slot (1362; 3362).

15. Use of a mechanism according to at least one of the preceding claims for a tilt and slide roof of a vehicle.

## Revendications

1. Mécanisme pour produire des mouvements de pivotement et des mouvements de coulissement d'un composant de carrosserie (30 ; 130 ; 230 ; 330), comprenant un chariot déplaçable (40, 140, 240, 340) qui est en prise, au moyen d'au moins un deuxième élément de guidage (42, 44, 46 ; 142, 144 ; 242, 244, 246 ; 342, 344) avec au moins un premier élément de guidage (361 ; 1361 ; 2361 ; 3361) disposé sur le composant de carrosserie, le chariot déplaçable (40, 140, 240, 340) étant pourvu d'au moins deux deuxièmes éléments de guidage (42, 44, 46 ; 142, 144 ; 242, 244, 246 ; 342, 344), qui coopèrent dans la position de fermeture et pendant les mouvements de pivotement du composant de carrosserie (30 ; 130 ; 230 ; 330) avec le premier élément de guidage (361 ; 1361 ; 2361 ; 3361) et dans le cas d'un mouvement de coulissement du composant de carrosserie (30 ; 130 ; 230 ; 330) avec un autre premier élément de guidage (362 ; 1362 ; 2362 ; 3362) supplémentaire, associé au composant de carrosserie (30 ; 130 ; 230 ; 330), **caractérisé en ce**
**qu'**au moins une partie des deuxièmes éléments de guidage (42, 44 ; 144 ; 242, 244 ; 344) parvient hors d'engagement avec le premier élément de guidage réalisé sous forme de guidage à tringle (361 ; 1361 ; 2361 ; 3361), dès qu'au moins l'un des deuxièmes éléments de guidage (46 ; 142 ; 342) est en prise avec l'autre premier élément de guidage réalisé sous forme de coulisse de commande (362 ; 1362 ; 3362).

2. Mécanisme selon la revendication 1,
**caractérisé en ce que** le premier élément de guidage supplémentaire est réalisé sous forme de coulisse de commande (362 ; 1362 ; 3362) ou sous forme de came de commande (2362).

3. Mécanisme selon l'une quelconque des revendications précédentes,
**caractérisé en ce qu'**au moins un élément de verrouillage (363, 364, 365 ; 1363, 1365 ; 2363, 2365 ; 3363, 3365) bloquant le mouvement de coulissement du composant de carrosserie (30 ; 130 ; 230 ; 330) dans sa position de fermeture pendant ses mouvements de pivotement est disposé sur le composant de carrosserie (30 ; 130 ; 230 ; 330) ou sur un composant (36 ; 136 ; 236 ; 336) associé au composant de carrosserie (30 ; 130 ; 230 ; 330).

4. Mécanisme selon la revendication 3,
**caractérisé en ce que** le chariot (40, 140, 240, 340) peut être déplacé le long d'un rail de guidage (20, 120, 220), qui présente au moins un évidement (22, 24, 26 ; 122, 126 ; 222, 226 ; 322, 326) pour l'engagement ou le passage de l'élément de verrouillage (363, 364, 365 ; 1363, 1365 ; 2363, 2365 ; 3363, 3365).

5. Mécanisme selon au moins l'une quelconque des revendications précédentes,
**caractérisé en ce que** les premiers éléments de guidage (361, 362 ; 1361, 1362 ; 2361, 2362) et/ou l'élément de verrouillage (363, 364, 365 ; 1363, 1365 ; 2363, 2365 ; 3363, 3365) sont réalisés au moins en partie d'une seule pièce sur le composant de carrosserie (30 ; 130 ; 230 ; 330) ou sur un composant (36 ; 136 ; 236 ; 336) disposé sur le composant de carrosserie (30 ; 130 ; 230 ; 330).

6. Mécanisme selon au moins l'une quelconque des revendications précédentes,
**caractérisé en ce que** les deuxièmes éléments de guidage (42, 44, 46 ; 142, 144 ; 242, 244, 246 ; 342, 344) sont réalisés au moins en partie d'une seule pièce avec le chariot (40, 140, 240, 340).

7. Mécanisme selon au moins l'une quelconque des revendications précédentes, **caractérisé en ce qu'**entre le premier élément de guidage réalisé sous forme de guidage à tringle (361 ; 1361 ; 2361 ; 3361) et le premier élément de guidage supplémentaire réalisé sous forme de coulisse de commande (362 ; 1362 ; 3362) ou sous forme de came de commande (2362 ; 33620) est prévu, dans la direction longitudinale, un espace vide (368 ; 2368 ; 3362) ou une région de transition (1368) amincie par rapport au reste de l'épaisseur du guidage à tringle (361 ; 1361 ; 2361 ; 3361).

8. Mécanisme selon au moins l'une quelconque des revendications précédentes, dans la mesure où elles dépendent de la revendication 3, **caractérisé en ce que** l'élément de verrouillage est formé par plusieurs tringles de commande (363, 364, 365 ; 1363, 1365 ; 2363, 2365 ; 3363, 3365) espacées les unes des autres dans la direction longitudinale, qui coopèrent à chaque fois avec un évidement (22, 24, 26 ; 122, 126 ; 222, 226 ; 322, 326) sur le rail de guidage (20 ; 120 ; 220 ; 320).

9. Mécanisme selon au moins l'une quelconque des revendications précédentes,
**caractérisé en ce qu'**une tringle de commande arrière (365 ; 1365 ; 2365 ; 3365) est disposée derrière les premiers éléments de guidage (361, 362 ; 1361, 1362 ; 2361, 2362 ; 3361, 3362).

10. Mécanisme selon au moins l'une quelconque des revendications précédentes,
**caractérisé en ce qu'**au moins une tringle de commande avant (363, 364 ; 1363 ; 2363 ; 3363) est disposée avant les premiers éléments de guidage (361, 362 ; 1361, 1362 ; 2361, 2362 ; 3361, 3362).

11. Mécanisme selon l'une quelconque des revendications 8 à 10,
**caractérisé en ce que** les tringles de commande (363, 364, 365 ; 1363, 1365 ; 2363, 2365 ; 3363, 3365), lors du coulissement du composant de carrosserie (30 ; 130 ; 230 ; 330), sont guidées dans une première piste de guidage (201 ; 1202 ; 2202 ; 3202) du rail de guidage (20 ; 120 ; 220 ; 320), tandis que des éléments de glissement (48 ; 148 ; 248 ; 348) sur le chariot (40, 140, 240, 340) sont guidés dans une autre piste de guidage (202 ; 1201 ; 2201 ; 3201) du rail de guidage (20 ; 120 ; 220).

12. Mécanisme selon l'une quelconque des revendications précédentes,
**caractérisé en ce qu'**un élément d'amortissement (50 ; 150) est disposé sur une surface du chariot (40, 140, 240, 340) tournée vers le composant de carrosserie (30 ; 130 ; 230 ; 330).

13. Mécanisme selon l'une quelconque des revendications précédentes,
**caractérisé en ce que** les premiers éléments de guidage (1361, 1362) sont formés par un guidage à tringle (1361) et une coulisse de commande (1362) se raccordant directement à l'extrémité arrière de celle-ci.

14. Mécanisme selon la revendication 13,
**caractérisé en ce que** l'un des deuxièmes éléments de guidage (142 ; 342) est constamment en prise sans interruption avec le guidage à tringle (1361 ; 3361) ou avec la coulisse de commande (1362 ; 3362).

15. Utilisation d'un mécanisme selon au moins l'une quelconque des revendications précédentes pour un toit ouvrant coulissant relevable d'un véhicule.
